# EUROPEAN PATENT APPLICATION

(11) **EP 1 457 521 A1**
(43) Date of publication of application: **15.09.2004**
(21) Application number: 04005878.6
(22) Date of filing: 11.03.2004
(51) Int. Cl.: C08K 9/04, C08K 5/54, C09C 3/12

(54) **Resin composition, filler, and method of producing resin composition**

(30) Priority: 11.03.2003 JP 2003064944
(71) Applicant: NISSAN MOTOR CO., LTD., Yokohama-shi Kanagawa-ken (JP)
(72) Inventor: Oda, Takashi, Yokosuka-shi Kanagawa-ken (JP); Kai, Yasuaki, Yokohama-shi Kanagawa-ken (JP); Ito, Tomohiro, Yokohama-shi Kanagawa-ken (JP)
(74) Representative: Grünecker, Kinkeldey, Stockmair & Schwanhäusser Anwaltssozietät

(57) **Abstract**

A resin composition comprises a thermoplastic resin, and an oxidized compound having a hydrophobic group and a polar group on the surface thereof. The resin composition of the present invention has high rigidity, dimensional stability, transparency and impact strength by dispersing the oxidized compound having the hydrophobic group and the polar group on the surface thereof in the thermoplastic resin, and is thus preferably applied to various molded products and parts of a vehicle.

## Description

### BACKGROUND OF THE INVENTION

### 1. Field of the Invention

The present invention relates to a resin composition having transparency and impact strength, and realizing an improvement in rigidity wherein an oxidized compound (filler) represented by a fine silica compound is dispersed, a filler comprising the oxidized compound, and a method of producing the resin composition. The present invention also relates to various molded products and parts utilizing the resin composition, and relates to a method of producing these molded products and parts.

### 2. Description of the Related Art

Transparent resins utilizable in optical usage such as an organic glass and a plastic lens include methacrylic resin, polycarbonate resin, styrene resin, and epoxy resin. The organic glass is used because it is superior to inorganic glass in impact resistance, weight saving, and moldability. Particularly, methacrylic resin has high light transmittance and low optical diffusion, is excellent in transparency, is also excellent in weather proof, and is thus used in various usages.

### SUMMARY OF THE INVENTION

The organic glass has the above-mentioned advantages, however, it is inferior to inorganic glass in rigidity. For example, when the organic glass is applied to a large site requiring certain rigidity, such as a front window for vehicles, it is necessary to increase the thickness of the organic glass, resulting in a reduction in its weight saving effect.

The organic glass has lower surface strength than that of inorganic glass and is easily marred with a wiper, thereby it is difficult to make its application to windowpane parts. In view of these problems, there is a related art in which resin glass is subjected to surface hardening treatment with an organic silane compound, but even by this treatment, the surface hardness is insufficient, and there is the problem that when the resin glass is used for a long time, mar resistance becomes insufficient. Accordingly, there is also a report in which spherical fine silica particles are added to transparent resin in order to satisfy rigidity, weight saving, and transparency simultaneously.

Japanese Patent Application Laid-open No. H11-343349 discloses a resin composition comprising hydrophobic spherical fine silica particles added to polymethylmethacrylate (PMMA), which is transparent and excellent in surface hardness and is sufficiently weight-saved. In recent years, however, there is increasing demand for higher transparency and higher machinery characteristics, and the above-described resin composition in the related art cannot meet the demand in recent years.

The present invention was made in consideration of the above-described problems. An object of the present invention is to provide a resin composition in which an oxidized compound (filler) capable of realizing improvements in rigidity and dimensional stability without particularly sacrificing transparency and impact strength, represented by a fine silica compound, is blended with and dispersed in a matrix resin, the filler, and a method of producing the resin composition. Another object of the present invention is to provide various molded products and parts utilizing the resin composition and a method of producing these molded products and parts.

The first aspect of the present invention provides a resin composition comprising: a thermoplastic resin; and an oxidized compound having a hydrophobic group and a polar group on the surface thereof.

The second aspect of the present invention provides a filler comprising: an oxidized compound having a hydrophobic group and a polar group on the surface thereof.

The third aspect of the present invention provides a method of producing a resin composition comprising: preparing a filler containing an oxidized compound having a hydrophobic group and a polar group on the surface thereof; and dispersing the filler in a thermoplastic resin.

The fourth aspect of the present invention provides a vehicle part comprising: a resin composition including a thermoplastic resin and an oxidized compound having a hydrophobic group and a polar group on the surface thereof.

The fifth aspect of the present invention provides a method of producing an integrally molded resin product, comprising: preparing a resin composition including a thermoplastic resin and an oxidized compound having a hydrophobic group and a polar group on the surface thereof; inserting the resin composition into a mold; and injecting a pressurized fluid into the resin composition to form a hollow structure.

### BRIEF DESCRIPTION OF THE DRAWINGS

The invention will now be described with reference to the accompanying drawings wherein;
FIG. 1 is a perspective view showing exterior parts for vehicle using the resin composition of the present invention;
FIG. 2A is a perspective view showing a vehicle outer plate using the resin composition of the present invention;
FIG. 2B is a top plan view showing a vehicle outer plate using the resin composition of the present invention;
FIG. 3 is a schematic view showing a wiper using the resin composition of the present invention;
FIG. 4 is a perspective view showing exterior parts for vehicle using the resin composition of the present invention;
FIG. 5 is a schematic view showing an instrument panel and an instrument cover using the resin composition of the present invention;
FIG. 6 is a top plan view showing a mirror and window using the resin composition of the present invention;
FIG. 7 is a cross-sectional view showing a lamp reflector using the resin composition of the present invention;
FIG. 8 is a perspective view showing engine room interior parts using the resin composition of the present invention;
FIG. 9 is an exploded perspective view showing an engine body, a timing chain, a gasket, and a front chain case using the resin composition of the present invention;
FIG. 10 is an exploded perspective view showing a water pipe, an O-ring, a water pump housing, a water pump impeller, a water pump, and a water pump pulley using the resin composition of the present invention;
FIG. 11 is an exploded perspective view showing a water pipe, a thermostat housing, a thermostat, and a water inlet using the resin composition of the present invention;
FIG. 12A and 12B are perspective views showing a hood, a door, a backdoor, a roof, a fender, a window, and a trunk lid using the resin composition of the present invention;
FIG. 13A and 13B are perspective views showing vehicle interior parts using the resin composition of the present invention;
FIG. 14 is a perspective view showing an integrally molded part using the resin composition of the present invention;
FIG. 15 and 16 are perspective views showing another example of an integrally molded part using the resin composition of the present invention;
FIG. 17A is a cross-sectional view showing a molded product having movable and immovable parts using the resin composition of the present invention;
FIG. 17B is a cross-sectional view taken on line A-A of FIG. 17A;
FIG. 18 is a schematic view showing a fuel tank and its surrounding parts using the resin composition of the present invention; and
FIGs. 19, 20, and 21 are diagrams showing compositions of resins in the Examples and Comparative Examples and their examination results.

### DETAILED DESCRIPTION OF THE PREFERRED EMBODIMENT

Hereinafter, description will be made of embodiments of the present invention with reference to the drawings.

The present invention relates to a resin composition comprising a thermoplastic resin and an oxidized compound having at least a hydrophobic group and a polar group on the surface thereof. Further, the present invention relates to a filler comprising an oxidized compound having at least a hydrophobic group and a polar group on the surface thereof.

In a transparent resin (organic glass) and a composite material, it is necessary that the interaction between the resin and its filler be increased while the filler is dispersed uniformly in the resin in order to improve performance such as transparency and impact strength. In the related art, however, when higher interaction between the resin and the filler is intended, dispersibility is worsened and transparency is deteriorated, while when the filler is dispersed uniformly in the resin, the interaction between the resin and the filler becomes insufficient, thus failing to sufficiently improve properties such as rigidity, impact strength, and dimensional stability.

According to the present invention, on the other hand, a filler having an oxidized compound including a hydrophobic group and a polar group on the surface is prepared, and contained in a predetermined thermoplastic resin to form the objective resin composition. The polar group binds strongly to a functional group of the thermoplastic resin, while the hydrophobic group repels the functional group of the thermoplastic resin.

Accordingly, the filler can exhibit its functions sufficiently in the thermoplastic resin by a strong bond with the thermoplastic resin, whereby the resulting resin product can sufficiently improve machinery characteristics such as impact strength and rigidity. On the other hand, the filler can be uniformly dispersed in a broad range without aggregation in the thermoplastic resin because of repulsive force attributable to the hydrophobic group. As a result, a novel resin composition excellent in machinery characteristics and transparency can be obtained.

Details and other characteristics of the present invention, the method of producing a resin composition, the molded products, the parts and the method of producing them are described in the following embodiments.

### (Resin composition and filler)

According to the present invention, it is required for the oxidized compound to have a hydrophobic group and a polar group, and the polar group preferably contains a hydroxyl group. The hydrophobic group and a polar group other than the hydroxyl group can thereby be easily introduced onto the surface of the oxidized compound. Examples of the oxidized compound having a hydroxyl group include silica, titania, alumina, and zirconia. In consideration of availability, cost, and easiness of surface treatment, silica is particularly preferable.

The polar group preferably contains a polar group other than the hydroxyl group. Interaction of the filler with the thermoplastic resin can thereby be further enhanced. The polar group includes an amino group, an ether group, an ester group, a nitro group, a cyano group, and an epoxy group, among which the amino group is preferable. One of these groups or two or more of these groups can be used. The amino group may be introduced into a major chain such as an alkyl group, allyl group, and aryl group or into a terminal of the major chain.

The amount of the polar group such as the amino group is preferably 50% or more based on the whole polar group including the hydroxyl group. If the amount is less than 50%, the interaction between the filler and the thermoplastic resin may be insufficient.

These polar groups form chemical bonds such as hydrogen bond, ionic bond, and covalent bond with functional groups of the thermoplastic resin thereby further enhancing the interaction between the thermoplastic resin and the filler, to improve the machinery characteristics. By this interaction, the dispersibility of the filler in the thermoplastic resin is synergistically improved.

The hydrophobic group in the oxidized compound forms repulsive force between the hydrophobic group and the thermoplastic resin, and by the repulsive force, the filler can be dispersed uniformly in the thermoplastic resin. Examples of the hydrophobic group include an alkyl group, an allyl group, and an aryl group. One of these groups or two or more of these groups can be used. The alkyl group may be present in a linear form. However, it is required for the alkyl group not to contain a polar group such as a hydroxyl group or an ether group because when the polar group is added to a major chain of the alkyl group, the alkyl group has polarity as a whole.

The percentage of the hydrophobic group in the oxidized compound is preferably within a range of 30 to 70% based on the whole of the hydrophobic group and the polar group. When the ratio is less than 30%, the filler has such a high polarity that it may be aggregated in the thermoplastic resin or in an organic solvent used in polymerization. When the ratio is higher than 70%, the interaction between the filler and the thermoplastic resin is decreased, and the transparency and machinery characteristics thereof in the finally obtained thermoplastic resin may not be sufficiently improved to desired levels.

The above percentage is that of the hydrophobic group by which e.g. a hydrogen atom of the polar group on the surface of the oxidized compound was replaced. When the polar group is a hydroxyl group, the above percentage is that of the hydrophobic group by which a hydrogen atom of the hydroxyl group was replaced.

The shape of the filler is not particularly limited, and the filler may be not only in a general spherical shape but also in the shape of a rectangular parallelepiped or a disk or in a linear (e.g. fibrous) or a branched shape.

The size of the filler is not particularly limited either, but it is necessary that at least one side of the oxidized compound constituting the filler be in nano order in order to exhibit desired performance in the form of a polymer nano-composite.

The phrase "at least one side of ... is in nano order" means that the diameter of the oxidized compound in a spherical form or at least one side of the oxidized compound in the shape of a rectangular parallelepiped or a disk, or at least the minor axis in a thick section of the oxidized compound in a linear (e.g. fibrous) or branched shape is in nano order. The range of "nano order" referred to herein is not particularly limited, but is preferably within a range of 1 nm to 200 nm, more preferably 1 nm to 100 nm, for improvement of physical properties, dispersibility, availability, and costs.

When the oxidized compound in the shape of a rectangular parallelepiped or a disk requires particularly high transparency, each side is preferably in nano order. Specifically, the length of the longest side thereof is not greater than the minimum value of visible light wavelength, that is, the length of the longest side thereof is 380 nm or less. The transparency of the resin composition containing the filler comprising the oxidized compound can be thereby further improved in the visible light range.

Insofar as desired uniform dispersibility and requirements (rigidity, heat resistance, and thermal expansion resistance) in desired usage can be obtained, the amount of the oxidized compound added into the resin composition in the present invention is not particularly limited, but is preferably within a range of 0.1 to 60% by weight, more preferably 1 to 30% by weight. When the amount is less than 0.1% by weight, the effect of the oxidized compound is low, and improvements in physical properties such as the rigidity, heat resistance and thermal expansion resistance of the resulting resin composition are hardly recognized. On the other hand, when the amount is greater than 60% by weight, the increase in specific gravity cannot be ignored and higher costs result, and thus characteristics of the thermoplastic resin, that is, low costs and low specific gravity, are deteriorated. Further, the reduction in impact strength cannot be ignored. When a large amount of a filler is added into a polymer, the impact strength is generally decreased; however, the resin composition of the present invention uses the filler in nano order, and the interaction between the filler and the polymer is so high that the reduction in impact strength is practically small, but when the amount of the filler is greater than 60% by weight, the reduction in impact strength cannot be ignored.

The thermoplastic resin may be a polymer or a copolymer having functional groups forming interaction with the filler containing the oxidized compound. Examples thereof include a polymer constituted by at least one kind of unsaturated monomer having a functional group capable of interacting with a polar group such as amino group on the surface of the oxidized compound, or a copolymer constituted by the unsaturated monomer and a monomer copolymerizable with the unsaturated monomer. The polymer includes, for example, acrylic resin or methacrylic resin. However, the thermoplastic resin is not limited thereto.

### (Method of producing the resin composition)

The objective resin composition in the present invention is formed by dispersing fillers including the oxidized compound described above in a predetermined thermoplastic resin. Hydrophobic groups can be introduced onto the surface of the oxidized compound by surface treatment of the oxidized compound with a predetermined surface modifier.

The hydrophobic groups on the surface of the oxidized compound can be easily formed by replacing hydrogen atoms in hydroxyl groups on the surface of the oxidized compound by hydrophobic groups. In the surface treatment, it is therefore preferable to employ a surface modifier having at least one of a chloro group, methoxy group, and ethoxy group as functional groups excellent in reactivity with hydrogen atoms in the hydroxyl groups. As described above, the hydrophobic group is preferably an alkyl group, allyl group or aryl group.

Accordingly, examples of the surface modifier include organosilicon compounds such as trichloro(n-butyl)silane, n-butyl(trimethoxy)silane, trichloro(n-decyl)silane, n-decyl(triethoxy)silane, chlorodimethoxy(methyl)silane. trichloro(n-dodecyl)silane, n-dodecyl(triethoxy)silane, trichloro(ethyl)silane, triethoxy(ethyl)silane, ethyl(trimethoxy)silane, trichloro(n-heptyl)silane, trichloro(n-hexadecyl)silane, n-hexadecyl(trimethoxy)silane, trichloro(n-hexyl)silane, triethoxy(n-hexyl)silane, n-hexyl(trimethoxy)silane, trichloro(metbyl)silane, triethoxy(methyl)silane, trichloro(n-octadecyl)silane, triethoxy(n-octadecyl)silane, trimethoxy(n-octadecyl)silane, trichloro(n-propyl)silane, triethoxy(n-propyl)silane, trimethoxy(n-propyl)silane, n-butyl(dicbloro)methylsilane, dichloro(n-decyl)methylsilane, dichloro(di-n-butyl)silane, dichloro(diethyl)silane, diethoxy(diethyl)silane, dichloro(di-n-hexyl)silane, dichloro(dimethyl)silane, dimethoxy(dimethyl)silane, dimethoxy(dimethyl)silane, dimethyl(dipropoxy)silane, chloro(methoxy)dimethylsilane, dichloro(di-n-octyl)silane, dichloro(dococyl)methylsilane, dichloro(dodecyl)methylsilane, dodecyl(dietboxy)metbylsilane, dichloro(ethyl)methylsilane, dichloro(n-beptyl)metbylsilane, dichloro(n-hexyl)methylsilane, dichloro(methyl)pentylsilane, dichloromethoxy(n-octadecyl)silane, dichloromethyl(n-octadecyl)silane, dichloro(methyl)propylsilane, chloro(n-decyl)dimethylsilane, chloro(ethyl)dimethylsilane, chlorodimethyl(n-octadecyl)silane, methoxydimethyl(n-octadecyl)silane, chlorodimetbyl(n-octyl)silane, chlorodimethyl(n-propyl)silane, chloro(trimethyl)silane, ethoxy(trimethyl)silane, methoxy(trimethyl)silane, trimethyl(n-propoxy)silane, and chloro(tri-n-propyl)silane,

When silica is used as the oxidized compound, the organosilicon compound can exhibit high reactivity with hydroxyl-containing silanol groups (-Si-OH) on the surface of the silica, thereby easily forming hydrophobic groups including alkyl groups on the surface of the silica.

Polar groups other than hydroxyl groups are introduced onto the surface of the oxidized compound by surface treatment of the oxidized compound with a predetermined surface modifier. As described above, the polar groups on the surface of the oxidized compound can be easily formed by replacing hydrogen atoms in hydroxyl groups on the surface of the oxidized compound by polar groups. In the surface treatment, it is therefore preferable to employ a surface modifier having at least one of a chloro group, methoxy group, and ethoxy group as functional groups excellent in reactivity with hydrogen atoms in the hydroxyl groups. The polar group is preferably an amino group, ether group, ester group, nitro group, cyano group or epoxy group.

The surface modifier having an amino group includes, for example, organosilicon compounds such as an alkoxy(aminoalkyl)silane compound and aminoalkyl(chloro)silane compound. Examples of the alkoxy(aminoalkyl)silane compound include N-2-aminoethyl-3-aminopropyl(trimethoxy)silane, N-2-aminoethyl-3-aminopropyl(dimethoxy)methylsilane, and 3-aminopropyl(triethoxy)silane. Examples of the aminoalkyl(chloro)silane compound include 3-aminopropyl(chloro)dimethylsilane and 4-aminobutyl(chloro)dimethylsilane.

The surface modifier having an ester group includes methacryloxypropyl tris(trimethylsiloxy)silane, 10-(carbomethoxy)decyl-chlorodimethylsilane, 2-(carbomethoxy)ethyl-dichloromethylsilane, 2-(carbomethoxy)ethyltrichlorosilane, acetoxyethyl(chloro)dimethylsilane, acetoxyethyl(dichloro)methylsilane, acetoxyethyl(trichloro)silane, acetoxymethyl(triethoxy)silane, acetoxymethyl(trimethoxy)silane, acetoxypropyl(trimethoxy)silane, and acetoxypropyl(trimethoxy)silane.

The surface modifier having an ether group includes 2-methoxy(polyethyleneoxy)propyl(heptamethyl)trisiloxane, 2-methoxy(polyethyleneoxy)propyl(trimethoxy)silane, and 3-methoxypropyl (triethoxy)silane.

The surface modifier having a nitro group includes 3-(2.4-dinitrophenylamino)propyl(triethoxy)silane.

The surface modifier having a cyano group includes dichloro(3-cyanobutyl)methylsilane, trichloro(3-cyanobutyl)silane, dichloro(2-cyanoethyl)methylsilane, trichloro(2-cyanoethyl)silane. 2-cyanoethyl(triethoxy)silane, 2-cyanoethyl(trimethoxy)silane, 3-cyanopropyl(diisopropyl)dimethylaminosilane, chloro(3-cyanopropyl)dimethyl silane, dichloro(3-cyanopropyl)methylsilane, 3-cyanopropyl(dimethoxy)silane, dichloro(3-cyanopropyl)phenylsilane, trichloro(3-cyanopropyl)silane, 3-cyanopropyl(triethoxy)silane, 3-cyanopropyl(trimethoxy)silane, 11-cyanoundecyl(trimethoxy)silane, and dichloro[bis(cyanopropyl))silane,

The surface modifier having an epoxy group includes (3-glycidoxypropyl)bis(trimethylsiloxy)methylsilane, ethoxy(3-glycidoxypropyl) dimethylsilane, diethoxy(3-glycidoxypropyl)methylsilane, (3-glycidoxypropyl) dimethoxymethylsilane, (3-glycidoxypropyl)trimethoxysilane, 5,6-epoxyhexyl(triethoxy)silane, 2-(3,4-epoxycyclohexyl)triethoxyethylsilane, and 2-(3,4-epoxycyclohexyl)ethyl(trimethoxy)silane,

The organosilicon compounds described above can be used alone or as a mixture of two or more thereof. When silica is used as the oxidized compound, the organosilicon compound reacts effectively with hydroxyl-containing silanol groups, thereby easily forming polar groups such as amino group.

The surface modifier for introducing hydrophobic groups and the surface modifier for introducing polar groups are previously added into a predetermined organic solvent and then dipping the oxidized compound in the organic solvent, thereby forming the hydrophobic groups and polar groups on the surface of the oxidized compound. The resulting filler is then contained or dispersed in a thermoplastic resin, or contained in a monomer-containing organic solvent and subjected to polymerization, whereby the desired resin composition can be obtained.

The surface modifier is contained in a monomer-containing organic solvent and the oxidized compound is dipped in the organic solvent, and the mixture is polymerized, whereby hydrophobic groups and polar groups can be formed on the surface of the oxidized compound and simultaneously a resin composition in which the filler including the oxidized compound is uniformly dispersed can be obtained.

Preferably, the thermoplastic resin constituting the resin composition of the present invention comprises acrylic resin or methacrylic resin. As described above, this resin is a polymer constituted by at least an unsaturated monomer having a functional group capable of interacting with a polar group such as an amino group, or a copolymer constituted by the unsaturated monomer and a monomer copolymerizable with the unsaturated monomer.

Preferably, the unsaturated monomer has a functional group such as a carboxyl group or sulfonic group. The functional group has high reactivity with a polar group such as an amino group and will not deteriorate the thermal plasticity of the finally obtained thermoplastic resin.

The unsaturated monomer includes, for example, hydroxyethyl(meth)acrylate, hydroxypropyl(meth)acrylate, hydroxybutyl(meth)acrylate. (meth)acrylamide, N-methylol(meth)acrylamide. diethylaminoethyl(meth)acrylate, aminoethylmethacrylate, glycidyl(meth)acrylate, allyl glycidyl ether, methyl vinyl ketone, methyl isopropenyl ketone, ethoxyethyl (meth)acrylate, methyl vinyl ether, ethyl vinyl ether, (meth)acrylic acid, styrenesulfonic acid, and sulfopropyl (meth)acrylate.

In the case of the copolymer, the monomer capable of copolymerizing the unsaturated monomer includes, for example, methacrylic monomers and acrylic monomers.

The acrylic monomers include, but are not limited to, (meth)acrylates such as methyl(meth)acrylate, ethyl(meth)acrylate, isopropyl(meth)acrylate, n-butyl(meth)acrylate, isobutyl(meth)acrylate, n-amyl(meth)acrylate, isoamyl(meth)acrylate, n-hexyl(meth)acrylate, 2-ethylhexyl(meth)acrylate, octyl(meth)acrylate, decyl(meth)acrylate, dodecyl(meth)acrylate, octadecyl(meth)acrylate, cyclohexyl(meth)acrylate, phenyl(meth)acrylate, and benzyl(meth)acrylate.

The monomers may be used alone or as a mixture of two or more thereof, but for balance among transparency, rigidity, hardness etc., methyl methacrylate is preferably used as a major component. In this case, the amount of methyl methacrylate is preferably 70% by weight or more.

In the case of the copolymer, the percentage by weight of the unsaturated monomer in the copolymer is preferably within a range of 0.1 to 30% by weight, more preferably within a range of 1 to 10% by weight. When the percentage of the unsaturated monomer is less than 0.1% by weight, the interfacial interaction of the copolymer with the filler may not be significantly improved, while when the percentage of the unsaturated monomer is higher than 30% by weight, the moisture absorption of the acrylic copolymer may be increased to deteriorate dimensional stability and durability. However, the above-defined percentage is not an essential requirement of the invention, and is thus not intended to limit the invention. Even if the percentage of the monomer is outside of the above range, the resulting material is included in the scope of the present invention insofar as the material as compared with a transparent resin or a composite material used in conventional organic glass etc. exhibits an action useful for the present invention.

Besides the above-mentioned acrylic resin, polycarbonate resin can also be used. In this case, a resin made from 4.4'-dioxydiaryl-alkane is preferable, and for example a resin made from bisphenol A can be preferably used. The polycarbonate resin is superior in heat resistance and impact resistance, and can be used preferably for a member requiring such physical properties.

### (Molded products and parts)

The resin composition of the present invention has characteristics by which it realizes improvements in rigidity without sacrificing transparency or impact strength, has low thermal expansion coefficient, can prevent warpage at high temperatures, is thus preferable as a member requiring such functions, and is suitable as a transparent member and equipment used for vehicles, electric appliances, and housings, for example interior materials such as a transparent cover for an instrument panel and exterior materials such as a windowpane, a head lamp, a sunroof, and a combination lamp cover.

Particularly, the resin composition of the present invention can exhibit its effect effectively in usage as a resin window (particularly, a resin window provided with a heating coil) as a substitute for inorganic glass requiring weight saving and the degree of freedom of molding; a molded exterior part for vehicles and an outer plate for vehicles; a resin wiper; a resin door mirror stay; a resin pillar; a molded resin product; a resin mirror; a resin lamp reflector; a resin cover and a resin case in an engine room; a resin part in a cooling unit; an integrally molded resin product having a hollow structure communicating with the air and/or a closed hollow structure; an integrally molded product comprising one part endowed with two or more different functions; a molded product having movable and unmovable parts; and a part or container for storing hydrocarbon fuels. Hereinafter, the usage of the resin plastic material of the present invention is described in more detail.

### • A molded exterior part for vehicles and an outer plate for vehicles

The resin composition of the present invention can be used in a molded exterior part for vehicles and an outer plate for vehicles. The resin composition of the present invention is excellent in transparency, impact resistance, and rigidity, is highly heat-resistant, has low thermal expansion coefficient, and is excellent in dimensional stability at the time of heating and molding, and is thus preferably used in a molded exterior part for vehicles and an outer plate for vehicles.

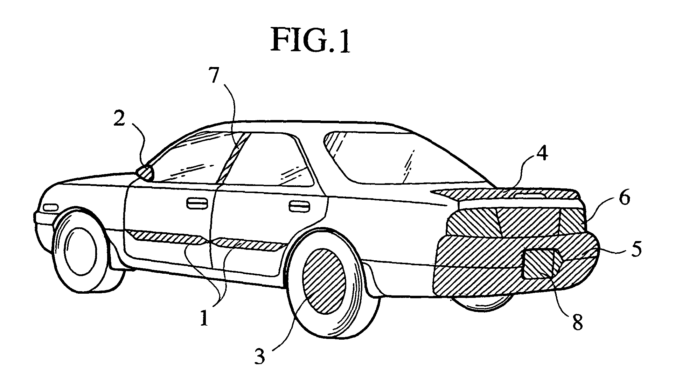

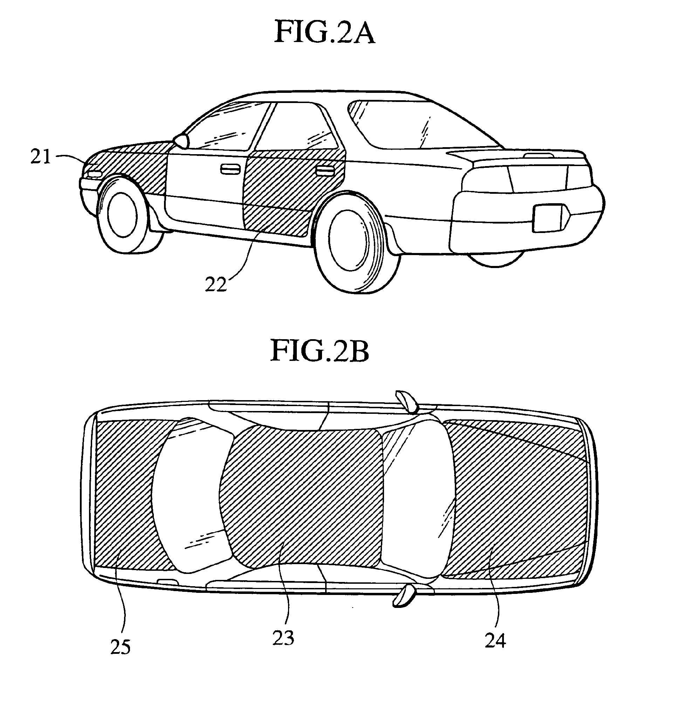

As shown in FIG. 1, the molded exterior part for vehicles includes a door molding 1, a door-mirror frame 2, a wheel cap 3, a spoiler 4, a bumper 5, a turn signal lens 6, a pillar garnish 7, a rear finisher 8, a head lamp cover (not shown) etc. As shown in FIG. 2A and FIG. 2B, the outer plate for vehicles includes a front fender 21, a door panel 22, a roof panel 23, a hood panel 24, a trunk lid 25, a backdoor panel (not shown) etc.

### • A resin wiper, a resin door mirror stay and a resin pillar

The resin composition of the present invention can be used in a resin wiper, a resin door mirror stay and a resin pillar. As described above, the resin composition of the present invention is excellent in transparency, impact resistance and rigidity, is highly heat-resistant, has low thermal expansion coefficient, and is excellent in dimensional stability at the time of heating and molding, and is thus preferably used in a part requiring improvements in visibility, such as a wiper.

The conventional wiper is made of black rubber and steel finished with a black coating, and suffers from a problem of deterioration in visibility at the time of low-speed actuation. The conventional door mirror stay is made of a resin finished with a coating of the same color as in an outer plate or with a black coating, and suffers from a problem of deterioration in visibility at the time of turning right or left. The conventional pillar is made of steel, and the front pillar or center pillar suffers from deterioration in visibility at the time of backward movement or confirmation of the rear.

When a transparent resin composition can be used in these parts, visibility is improved, but the resin composition requires high rigidity, heat resistance, and dimensional stability at the time of heating and molding, and the conventional transparent resin composition hardly meets these requirements. On the other hand, the present resin composition excellent in transparency with high rigidity, low thermal expansion coefficient and low thermal shrinkage can be used as a parent material to solve these problems, thus giving the transparent parts. It can be expected that these transparent parts not only improve the view of field but also contribute to improvement of design.

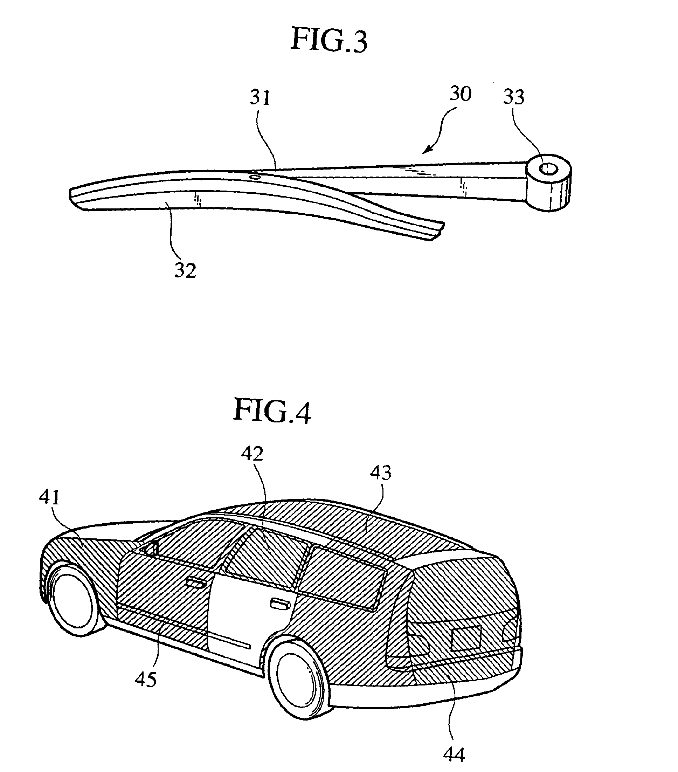

One embodiment of the wiper of the present invention is shown in FIG. 3. As shown in FIG. 3, the wiper 30 is constituted of a wiper arm 31 and a wiper blade 32, and moves so as to draw a half circle around a fixing nut hole 33 for wiper arm. The wiper blade 32 is constituted of elastic supporting parts and a soft rubber part.

In the wiper of the present invention, the resin composition of the present invention is used as a transparent material in at least one supporting part of wiper arm 31 and wiper blade 32. The rubber part used in the wiper blade 32 in the wiper of the present invention is preferably a highly durable and relatively transparent silicon rubber or the like. The supporting part of wiper blade 32 may be prepared from a mixed resin-rubber composition comprising a suitable amount of an acrylic rubber component added to the resin composition of the present invention. The supporting member of the wiper blade can thereby be endowed with suitable elasticity.

The mixed resin-rubber composition includes, for example, a composition comprising 1 to 30 parts by weight of an acrylic rubber component added to 100 parts by weight of the resin composition of the present invention. The acrylic rubber component includes ethyl acrylate, butyl acrylate, and a polymer thereof such as Nipol AR31 manufactured by Zeon Corporation.

The door mirror stay and pillar may comprise the resin composition of the present invention as a sole transparent material therein, but can be constituted of a multilayer laminate comprising the resin composition of the present invention laminated with another resin composition. The multilayer laminate may contain at least one layer comprising at least the resin composition of the present invention, and the layer consisting of the resin composition of the present invention can be arranged preferably as the uppermost and lowermost layers of the laminate, more preferably not only as the uppermost and lowermost layer but also as an interlayer of the laminate. The multilayer laminate thus formed can be endowed with additional functions not demonstrated by only the resin composition of the present invention.

When the multilayer laminate is used, the thickness of each layer can be suitably determined depending on the thickness of the final molded product and the number of layers in the laminate. Other resin compositions forming the multilayer laminate include polycarbonate, polystyrene, and a styrene/methyl methacrylate copolymer.

The method of producing the same and the constitution thereof are not particularly limited, and each product may be composed of a single part. For example, the door mirror stay and front pillar, or the pillar and resin roof panel, may be integrally molded by a method of producing an integrally molded product described later.

### • Molded resin product

The resin composition of the present invention can be used in a molded resin product having transparent and opaque parts wherein at least the transparent part comprises the resin composition of the present invention. The resin composition of the present invention is highly rigid and highly heat-resistant, is excellent not only in dimensional stability at the time of heating and molding but also in chemical resistance, transparency and impact resistance, and is thus preferably used in a part having transparent and opaque parts. The molded resin product having transparent and opaque parts wherein at least the transparent part comprises the resin composition of the present invention is described in detail by reference to vehicle parts.

In vehicles, there are transparent parts such as lamps, covers, and glasses, and opaque parts such as outer plates and interior parts. These parts require a wide variety of different characteristics such as transparency, rigidity, heat resistance, low coefficient of linear expansion, low molding shrinkage, and chemical resistance so that with conventional resin compositions, these transparent parts and opaque parts are hardly integrally molded.

On the other hand, the resin composition of the present invention having characteristics such as high rigidity, high heat resistance, low coefficient of linear expansion, low molding shrinkage, and high chemical resistance can be used as at least a transparent material thereby solving the problem. Further, a transparent part and an opaque part can be integrally molded to reduce the number of parts and the number of steps and to reduce the weight of parts. Further, several kinds of parts can be integrally molded so that conventionally divided external lines can be formed as one continuous line, thus improving the outward appearance of the parts.

A head lamp requiring transparency is contacted with separate transparent or opaque parts such as a bumper, a front grill, a fender, and a hood arranged therearound. These transparent or opaque parts can be integrally formed to reduce the number of parts. Conventionally, these parts have been assembled one after another, but in the present invention, one integrated part may be assembled to reduce the number of assembling steps.

The resin composition of the present invention has such a high heat resistance that even if the heat source of a lamp is near to the resin composition, the resin will not melt. A conventional head lamp is made of polycarbonate resin poor in light resistance, and because of yellowing upon exposure to sunlight, the lamp should be provided thereon with a coating. This problem can also be solved by using the resin composition of the present invention.

The vehicle glass requiring transparency includes side glass and backdoor glass attached to a door and rear quarter glass and rear glass bonded via an adhesive to a rear fender and a roof. By using the resin composition of the present invention in at least transparent parts, a part comprising these parts molded integrally with the glass can be obtained. For example, side glass and backdoor glass are arranged between the door outer and door inner, but by using the resin composition of the present invention to form a hollow therein, the door outer/door inner/glass can be integrally and simultaneously molded to reduce the number of parts.

Further, the door outer and door inner are used to form a hollow therein. and the resin composition of the present invention is cast into the hollow, whereby the door outer/door inner/glass can be integrally molded. In a later step, a door lock, a wiper motor etc. are arranged in the hollow of the part. Similarly, a pillar garnish and rear quarter glass can also be integrally molded.

By utilizing the characteristics (transparency, high strength and high rigidity) of the resin composition of the present invention, a structural part can be made partially transparent. For example, the resin composition of the present invention can be used in a part of a roof to make the part transparent. Accordingly, a transparent roof can be obtained without arranging a glass sunroof. Thus, the resin composition of the present invention can be used to form a structural part maintaining high strength and high rigidity, which is transparent in the part of the molded resin product and opaque in the other part. The transparent part may be colored.

A van shown in FIG. 4 has molded resin products having transparent and opaque parts, such as an integrally molded lamp hood/fender resin product 41, an integrally molded pillar garnish/glass resin product 42, an integrally molded roof fender/glass resin product 43, an integrally molded backdoor/glass resin product 44, and an integrally molded door/glass resin product 45. The resin composition of the present invention can be applied to transparent parts of these molded resin products. For example, the resin composition of the present invention can be applied to a lamp hood of the integrally molded lamp hood/fender resin product 41. Thus, the resin composition of the present invention can be used to reduce the number of parts and the number of steps for attaching parts.

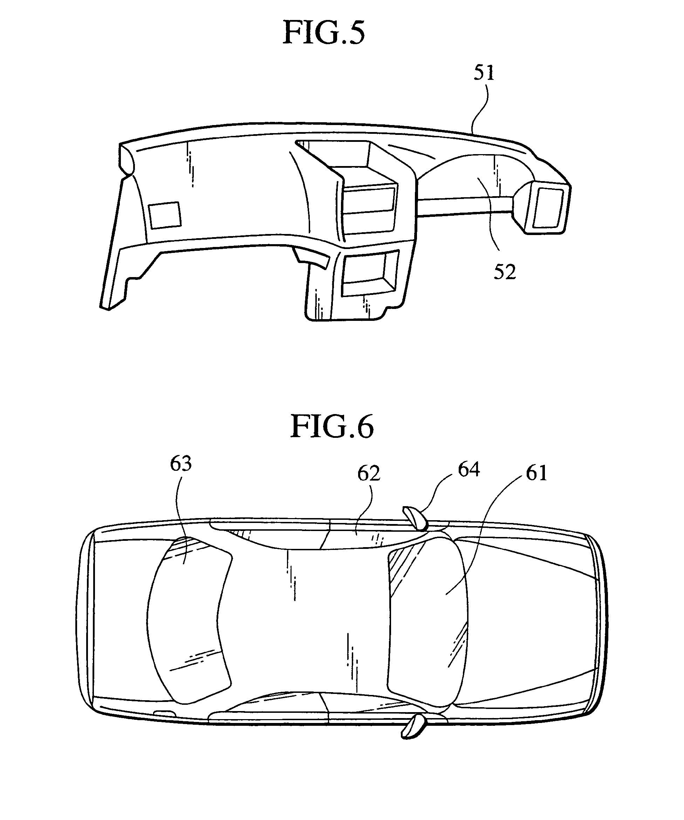

FIG. 5 shows an instrument panel and a meter cover comprising a transparent, resin part and an opaque resin part molded integrally therein. By using the resin composition of the present invention in the transparent resin part, the transparent resin part and the opaque resin part can be integrally molded, and thus the instrument panel 51 and the meter cover 52 are integrally molded and then several kinds of parts are integrated in the instrument panel thereby reducing the number of parts and achieving weight saving.

The molded resin product having transparent and opaque parts wherein the opaque part was colored is obtained by a method using a starting colored resin, by a method of coloring the opaque part by coating or printing, or by a method using a colored sheet as opaque resin.

The starting colored resin is obtained by previously dispersing a pigment in a starting resin or by melting starting resin pellets and pigment pellets simultaneously, kneading them and injecting the mixture into a mold in an injection molding machine to give the colored resin. For using the colored resin to produce the molded resin product, the mold containing the colored resin is opened, or a path for passing the melted resin is newly produced, and a transparent melted resin may be injected through another cylinder into a vacant space in the mold. The molded resin product having a transparent part and a colored opaque part can thereby be produced. Either the opaque resin or the transparent resin may be first introduced.

For forming an opaque part colored by coating or printing, a transparent resin is previously melted to form a desired molded resin product, before or after which the outside or inside of the molded resin product is coated or printed to secure coloration and opaqueness. The melted resin before shaping can be coated or printed and then shaped.

When a colored sheet is used as opaque resin, a previously colored opaque sheet is preliminarily shaped and then arranged in a mold. A melted transparent resin is then injected into the mold, solidified by cooling and removed from the mold, to give the molded resin product of the present invention.

According to the above-described methods, not only a molded resin product wherein the glass part is transparent while the roof and fender are opaque but also a molded resin product wherein an upper part of the glass and a part of the roof are transparent while the fender, the rest of the glass and the rest of the roof are opaque can be formed as the integrally molded roof fender/glass resin product

Further, the molded resin product comprising transparent and opaque parts molded integrally therein according to the present invention can be constituted exclusively of the resin composition of the present invention, but can be constituted of a multilayer laminate comprising the resin composition of the present invention laminated with another resin composition. The multilayer laminate may contain at least one layer comprising at least the resin composition of the present invention, and the layer consisting of the resin composition of the present invention can be arranged preferably as the uppermost and lowermost layers of the laminate, more preferably not only as the uppermost and lowermost layer but also as an interlayer of the laminate. The multilayer laminate thus formed can be endowed with additional functions not demonstrated by only the resin composition of the present invention. The type of another resin constituting the multilayer and the thickness of each layer can be suitably selected depending on the usage of the molded resin product.

### • A resin window, a resin mirror, a resin lamp reflector, a resin cover and a resin case in an engine room, and a resin part in a cooling unit

The resin composition of the present invention can be used in parts comprising the resin composition, such as a resin window, particularly preferably a resin window provided with a heating coil, a resin mirror, a resin lamp reflector, a resin cover, and a resin case in an engine room, and a resin part in a cooling unit.

The resin composition of the present invention is highly rigid and highly heat-resistant and is excellent not only in dimensional stability at the time of heating and molding but also in chemical resistance and transparency, and is thus preferably used in a resin window, a resin mirror, a resin lamp reflector, and a resin cover, and a resin case in an engine room, thus reducing the number of parts and the number of steps and reducing the weight of parts. Further, the resin composition of the present invention can be used as a transparent material, in order to serve as a substitute for a material in a part requiring transparency to improve anti-fogging properties and visibility.

As shown in FIG. 6, resin windows such as rear window 63, door window (side window) 62 and front window 61 are provided in some cases with a heating coil heater capable of heating the inside or surface of the molded product to confer an anti-fogging function thereon. In this case, the window is arranged as a part for wind and rain protections, in the front and rear of a vehicle and in a side door, and the area used therefor is 3 to 4 m², and its corresponding weight is 30 to 35 kg in the case of conventional inorganic glass, and thus the resin composition of the present invention can be expected to achieve weight saving.

When the conventional transparent resin composition is used, the heat resistance of the resin composition suffers from the problem of heat resistance against a heating coil heater, but the resin composition of the present invention is excellent in dimensional stability at the time of heating and molding, and can thus be used to solve the problem. Further, the resin composition of the present invention has such a high rigidity, so that it can be applied to large parts such as front window 61, door window 62, and rear window 63 as shown in FIG. 6, in order to achieve weight saving.

The method of forming the heating coil heater is not particularly limited, and any methods can be used. Mention is made of e.g. a method of insert molding of a heating coil in the form of film and a method of forming a heating coil by vapor deposition, coating or printing on the surface of the resin at the side of a room. The resin composition of the present invention has high rigidity and can thus be applied to large parts such as front window, door window and rear window, in order to achieve weight saving.

The transparent resin of the present invention can be used to produce the resin side mirror 64 to achieve weight saving as compared with that by conventional glass or transparent resin, and can be provided with a heating coil heater to confer an anti-fogging function thereon. The transparent resin of the present invention can be applied to a room mirror in a vehicle besides the side mirror shown in FIG. 6.

As described above, the resin composition of the present invention has characteristics by which it can realize improvements in rigidity without sacrificing transparency and impact strength and can prevent warpage etc. at high temperatures due to low thermal shrinkage. Accordingly, the resin composition of the present invention can be applied to various parts such as a window and a mirror not practically used because of their problem to be solved for safety and functions. Conventionally required weight saving and greater freedom of design for vehicles can thereby be achieved.

In recent years, station wagon type recreational vehicles having a greater area of windows have remarkably spread, and there is increasing demand for windows made of resin to improve weight saving, driver's viewing ability and comfortableness. The transparent resin glass formed from the resin composition of the present invention has functions required of vehicle windows, thus contributing to the weight saving of vehicles and improvement in comfortableness. The resin composition of the present invention can be used not only in the resin windows but also in parts requiring high qualities in outward appearances such as beauties of vehicles, smoothness and transparency and requiring high rigidity and mar resistance, such as exterior or interior materials in buildings and interior materials in a train.

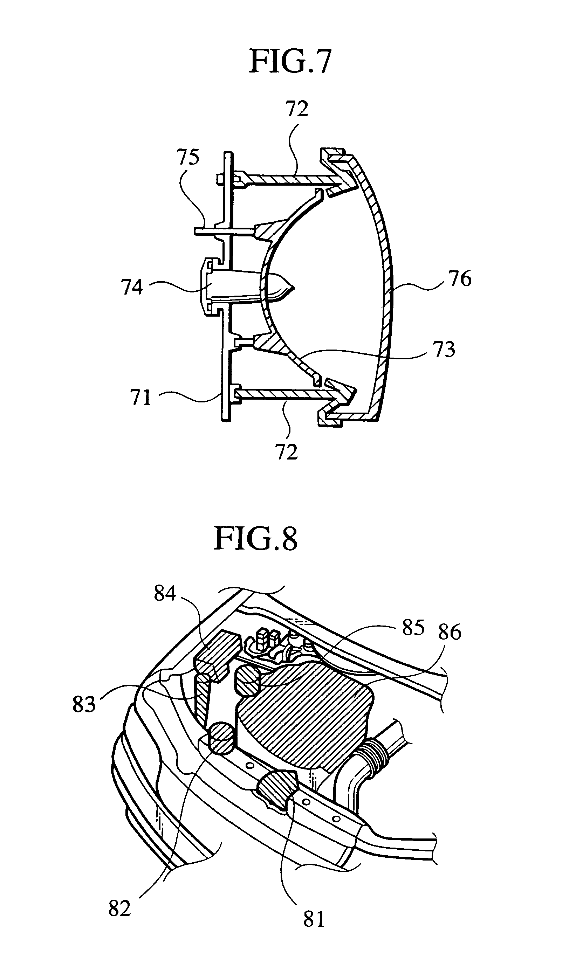

FIG. 7 shows a vehicle lamp. As shown in FIG. 7, a reflector 73 is arranged in the inside of an outer member 72 fixed to a main body 71 at the side of a vehicle, the reflector 73 has a valve 74 and an optical collimator 75 connected thereto, and the outer member 72 has an outer lens 76 fixed thereon. When the reflector 73 is composed of a conventional resin composition, the reflector is inferior in some cases in heat resistance, coefficient of linear expansion and linear expansion anisotropy, but these problems are solved by using the resin composition of the present invention. In particular, the resin composition of the present invention has such a high rigidity that it can be formed into a lamp reflector capable of securing weight saving and high heat resistance and excellent in dimensional stability and surface smoothness, and can be used preferably in reflectors in a head lamp, a fog lamp and a rear combination lamp or a sub-reflector in a head lamp.

The method of forming such reflective parts includes, for example, a method of insert molding a reflective film in producing the member and a method which involves molding the member by injection molding or press molding and then forming a deposited film on the reflective part.

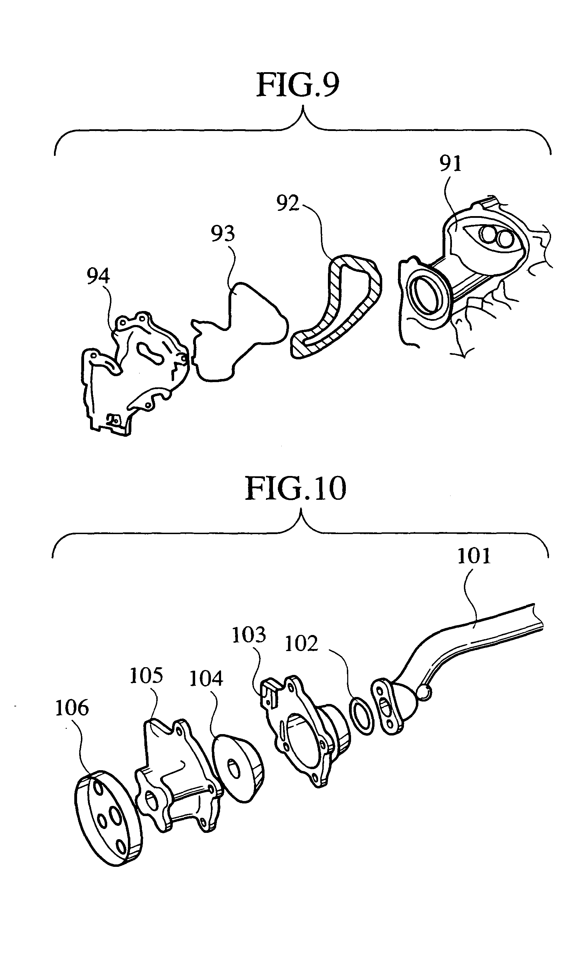

The resin composition of the present invention can be applied to a resin cover or a resin case in an engine room. The inside of the engine room is shown in FIGs. 8 and 9. The resin composition of the present invention is excellent in transparency, heat resistance, chemical resistance, rigidity, and strength, and can thus be used in an engine room under a severe temperature condition and formed into lightweight parts. Such parts include a radiator 81, a coolant reserve bank 82, a washer tank inlet 83, an electrical part housing 84, a brake oil tank 85, a cylinder head cover 86, an engine body 91, a timing chain 92, a gasket 93, and a front chain case 94. The resin composition of the present invention is transparent and can thus improve the recognizability of tanks or covers such as the washer tank inlet, the electrical part housing, the brake oil tank, the cylinder head cover, and a timing belt cover.

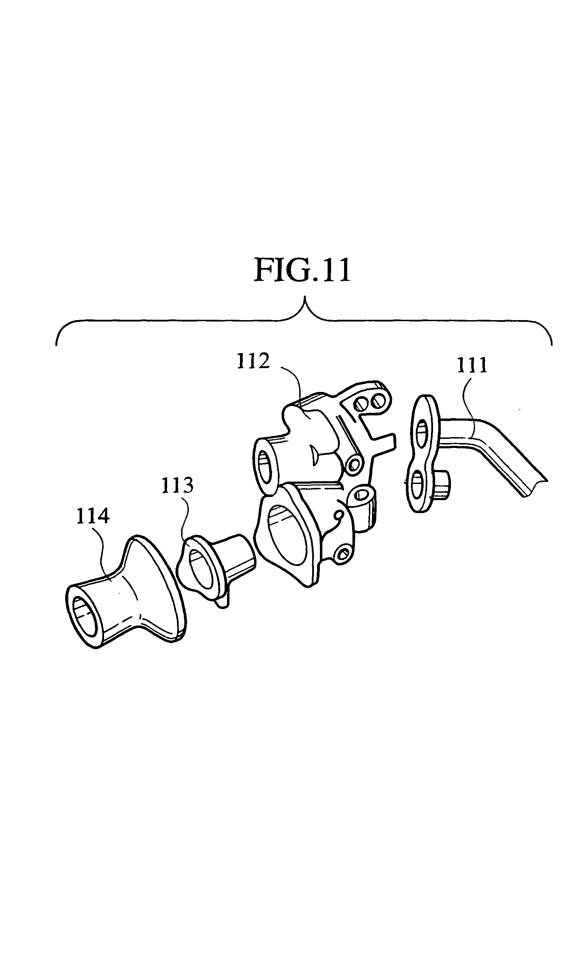

The resin composition of the present invention can be formed into lighter parts excellent in heat resistance, chemical resistance, rigidity, and strength and can thus be used as parts contacting with cooling water in a vehicle engine room. Such resin parts in a cooling unit are shown in FIGs. 10 and 11. Examples of such parts include radiator-tank parts such as the top and base of a radiator tank, a coolant reserve tank and a valve, for example a water pipe 101, an O-ring 102, a water pump housing 103, a water pump impeller 104, a water pump 105 and a water pump pulley 106 shown in FIG. 10 and a water pipe 111, a thermostat housing 112, a thermostat 113, and a water inlet 114 in FIG. 11. The resin composition can be used to achieve weight saving, to improve chemical resistance and to reduce fuel costs, and thus it has a high practical value.

Each part of the present invention can be constituted exclusively of the resin composition of the present invention, but can be constituted of a multilayer laminate comprising the resin composition of the present invention laminated with another resin composition. The multilayer laminate may contain at least one layer comprising at least the resin composition of the present invention, and the layer consisting of the resin composition of the present invention can be arranged preferably as the uppermost and lowermost layers of the laminate, more preferably not only as the uppermost and lowermost layer but also as an interlayer of the laminate. The multilayer laminate thus formed can be endowed with additional functions not demonstrated by only the resin composition of the present invention. The type of another resin constituting the multilayer and the thickness of each layer can be suitably selected depending on intended use.

### • An integrally molded resin product having a hollow structure and/or a closed hollow structure

The resin composition of the present invention can be used in an integrally molded resin product comprising the resin composition having a hollow structure communicating the air and/or a closed hollow structure. As described above, the resin composition of the present invention is highly rigid and highly heat-resistant, is superior in dimensional stability at the time of heating and molding, and is thus preferably used in parts having a hollow structure, such as a door, roof and hood. The integrally molded resin product of the present invention is preferably an outer plate for vehicles or an interior or exterior part for vehicles.

The outer plate or interior/exterior part for vehicles is often a part composed of a steel plate and a resin panel with a hollow structure equipped with devices in the part. For example, the outside and inside of a side door and a backdoor are composed of a steel plate having a hollow structure, followed by coating, and in the assemble step, a resin panel is attached to the inside the steel plate, and various devices are attached to the hollow structure. Further, an outer plate and a reinforced rain hose in a roof, a hood, a trunk lid, and a backdoor are composed of a steel plate, and after coating, a resin part is attached to the inside. These parts having a hollow structure are large and require rigidity and dimensional stability, but these parts are hardly integrally molded when they are composed of conventional resin compositions. However, the present resin composition having high rigidity, low thermal expansion coefficient and low thermal shrinkage can be used in integral molding to reduce the number of parts, the number of steps and the weight of parts.

The integrally molded resin product can be constituted exclusively of the resin composition of the present invention, but can be constituted of a multilayer laminate comprising the resin composition of the present invention laminated with another resin composition. The multilayer laminate may contain at least one layer comprising at least the resin composition of the present invention, and the layer consisting of the resin composition of the present invention can be arranged preferably as the uppermost and lowermost layers of the laminate, more preferably not only as the uppermost and lowermost layer but also as an interlayer of the laminate. The multilayer laminate thus formed can be endowed with additional functions not demonstrated by only the resin composition of the present invention. The type of another resin constituting the multilayer and the thickness of each layer can be suitably selected depending on intended use.

The integrally molded resin product can improve design, feel and touch by providing the outermost surface layer with a decorative layer such as skin material, designed printing layer etc., and thus the outermost layer of the integrally molded product is composed preferably of a decorative material. For example, a molded product comprising a skin material such as a raised sheet, an embossed pattern sheet, a laser pattern sheet or a wood-effect sheet arranged on the outermost layer can be used in a roof at the side of a room, a pillar garnish, an instrument panel etc. When the multilayer laminate described above is used, a designed printing layer may be arranged as an interlayer while a transparent material can be used as a skin layer to improve gloss and to feel depth.

In the integrally molded product having a hollow structure according to the present invention, the hollow structure preferably comprises a gas, liquid or solid or a mixture of two or more thereof packed and sealed therein. This is because the heat insulating performance and sound insulating performance of the integrally molded product can thereby be improved.

The materials to be packed and sealed are not particularly limited, and any filling and encapsulating materials can be used, when transparency is required, a gas such as nitrogen, argon, carbon dioxide or air is preferable, while when transparency is not required, not only the above gas but also paraffin and wax which turn liquid upon heating for sealing and become solid at ordinary temperatures after sealing are preferable.

The materials to be packed and sealed can keep the car cool in summer by preventing heat from entering the car, and keep the car warm in winter by preventing leak of heat, thus maintaining the comfortable environment in the car. By making a hollow structure having a double-wall hollow therein, noise energy from the outside is reduced or absorbed whereby the car can be maintained silent. Further, radiation noise and radiation heat from the engine room can be reduced by using a hood made of the integrally molded resin product of the present invention.

The method of producing the integrally molded product having a hollow structure according to the present invention is not particularly limited, and any methods can be used, general methods such as a vacuum pneumatic molding method, an injection molding method, a blow molding method and a press molding method can be used, or the following first to third methods are preferably used.

In the first method, two resin sheets made of the resin composition of the present invention are fixed to a holder provided with a path for injecting a pressurized fluid, and the holder is sealed to form a closed space between the two sheets. Each sheet is heated at a deflection temperature under load and inserted into an open mold, and then the outer periphery of the softened sheet is fused by pressing with the mold. Before, while or after the outer periphery is fused, preferably before or after the outer periphery is fused, a pressurized fluid is injected into a closed space between the two sheets, and while or after the sheet is distended, the mold is closed and the pressure of the pressurized fluid is maintained until the molded product is cooled, whereby a hollow structure is formed.

Preferably, a mold provided with a vacuum suction hole is used, and while the sheet is distended, vacuum suction is applied to enhance the adhesion between the mold and the sheets. By using vacuum suction, the transferability of the resulting integrally molded product can be improved. That is, a typical method of producing the integrally molded resin product comprising: heating two resin sheets comprising the resin composition of the present invention; then inserting the sheets into an open mold; pressing the outer periphery of the sheets; injecting a pressurized fluid between the sheets before or after the outer periphery thereof is fused; closing the mold while or after the sheet is distended; and maintaining the pressure of the pressurized fluid to form a hollow structure.

The second method is a method wherein the melted resin composition of the present invention is charged into a closed mold, and then the mold is allowed to move backwards to extend the capacity of the cavity and simultaneously a pressurized fluid is injected into the inside of the melted resin to form a hollow structure. That is, while or after the melted resin composition of the present invention is charged into a closed mold, the capacity of the cavity is extended and simultaneously a pressurized fluid is injected into the melted resin to form a hollow structure.

The third method is a method which comprises: inserting one resin sheet made of the resin composition of the present invention into the cavity at one side of a mold; closing the mold; moving the mold backwards to extend the capacity of the cavity while or after charging a melted resin into the back surface of the resin sheet, and simultaneously injecting a pressurized fluid into the melted resin thereby forming a hollow structure, or a method which comprises: inserting two resin sheets into cavities at both sides of a mold; closing the mold; moving the mold backwards to extend the capacity of the cavity while or after charging the melted resin between the resin sheets, and simultaneously injecting a pressurized fluid into the melted resin thereby forming a hollow structure. That is, one or two resin sheets comprising the resin composition of the present invention are inserted into an open mold, and while or after the melted resin is charged into the back surface of the sheet or between the two sheets in the closed mold, the capacity of the cavity is extended and simultaneously a pressurized fluid is injected into the melted resin to form a hollow structure.

The type of the resin charged between sheets or into the back surface of a sheet is not particularly limited insofar as it is a resin adhering to a sheet comprising the resin composition of the present invention, but the resin is preferably the same kind of resin as that contacting with the resin composition of the present invention constituting the sheet, or a resin having a similar solubility parameter (SP value) to that of the resin composition of the present invention. Such filler resin includes polycarbonate resin, styrene-based resin, poly-4-methyl pentane-1, thermoplastic polyurethane resin etc., among which the polycarbonate resin is preferably used.

The polycarbonate resin is a polymer derived from a divalent phenol compound represented by bisphenol A, and may be produced by a phosgene method, an ester exchange method or a solid phase polymerization method. It may also be conventional polycarbonate resin or polycarbonate resin polymerized by an ester exchange method.

The type of the pressurized fluid is not particularly limited, and can be selected from various pressurized fluids in consideration of components etc. of the resin sheet. For example, a gas such as air, nitrogen gas etc. or a fluid such as water or silicon oil is preferably used.

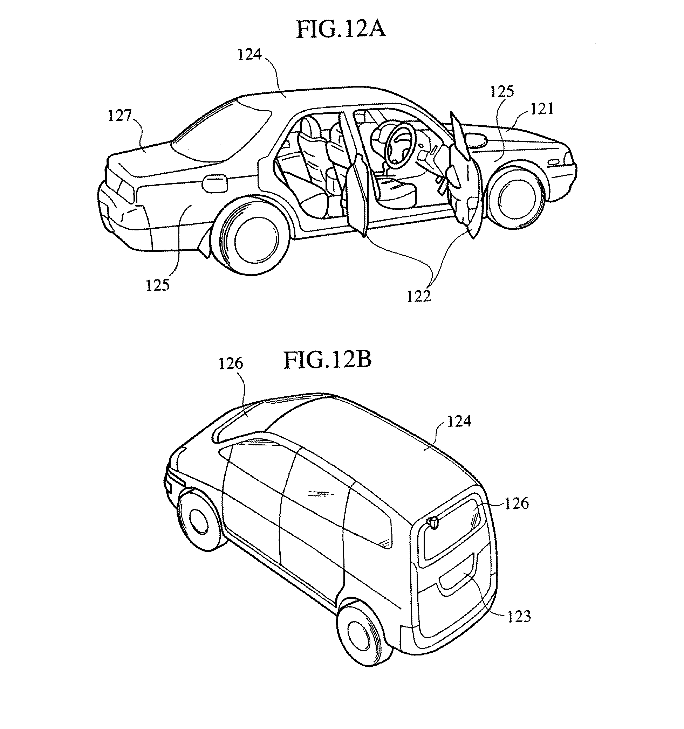

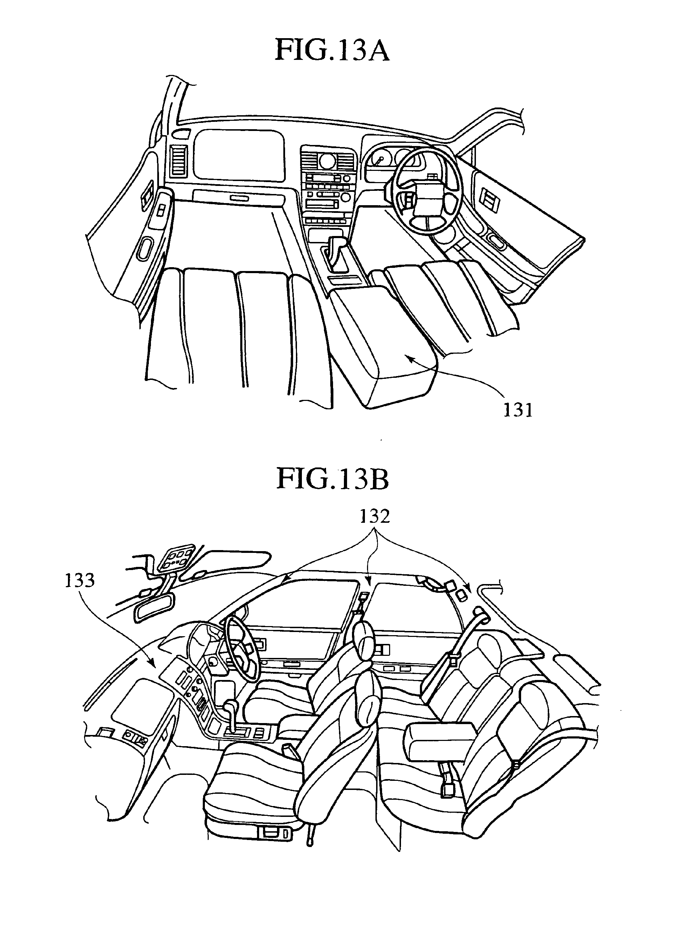

As shown in FIGs. 12A to 13B, the part to which the integrally molded resin product having a hollow structure according to the present invention is applied includes a hood 121, a door 122, a backdoor 123, a roof 124, a fender 125, a window 126, a trunk lid 127, a center console box 131, a pillar garnish 132, an instrument panel 133 and a head lining (not shown). These parts can be used to mold the inner/outer, their accompanying parts and a rain hose simultaneously and integrally to reduce the number of parts and the number of steps.

By further sealing a gas, liquid, solid or a mixture thereof in the hollow, additional functions such as heat insulating performance, sound insulating performance etc. can be conferred. For example, a hood can be molded integrally with a rain hose or endowed with sound insulating/heat insulating functions, a roof can be molded integrally with a head lining or endowed with heat insulating/sound insulating functions, and a door or fender including inner/outer structures thereof can be molded.

### • An integrally molded product having two or more functions

The resin composition of the present invention can be used in an integrally molded product comprising the resin composition, wherein two or more parts having different functions can be integrated to endow the product with two or more functions. The different functions refer to an indicating function such as that of an instrument panel, a ventilation function such as that of an air conductor, and a fixing function such as that of a roof rail.

The resin composition of the present invention has various functions such as high rigidity, high heat resistance, dimensional stability at the time of heating and molding, and chemical resistance, and can thus be applied to members expected to secure various functions, and these members can be integrated to form an integrally molded product comprising a single part endowed with two or more functions. Thus, the resin composition of the present invention is preferably used in making a module of large parts or in integration thereof thereby reducing the number of parts, the number of steps and the weight of parts while maintaining high qualities.

For example, a conventional instrument panel, that is, a large interior part is produced by producing a panel, an air duct of an air-conditioner, a case and a cross car beam (steering cross member) separately and then assembling them in a car production line. When the panel, the air-conditioner air duct and the case, each comprising a conventional resin composition, are integrally molded, the resulting molded product has a larger size, and a complicated shape, thus suffering from problems such as shrink marks and warpage attributable to molding shrinkage and expansion upon heating, but these problems can be solved by using the resin composition of the present invention.

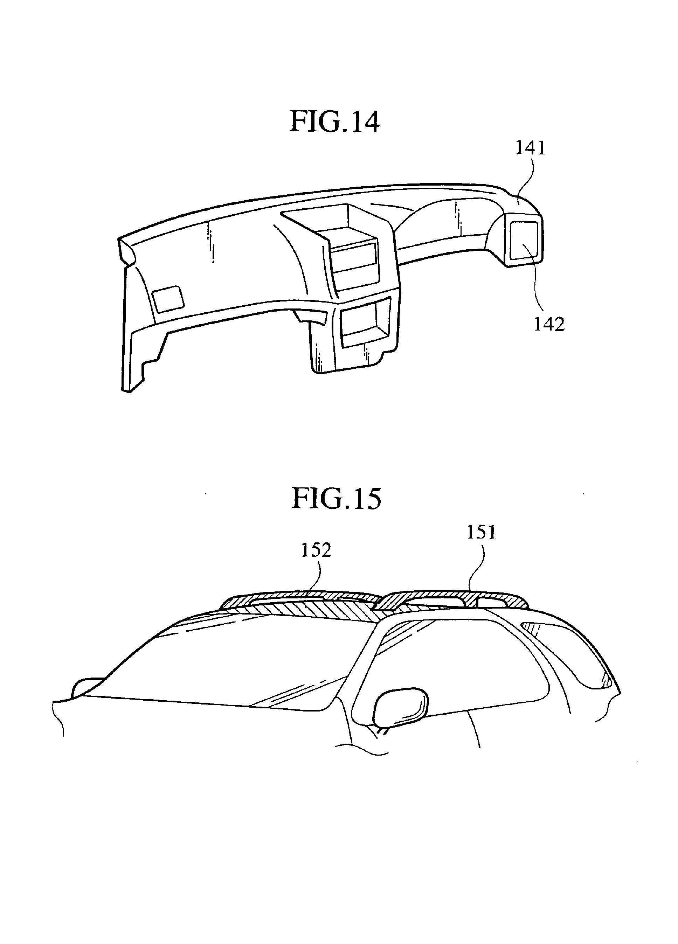

Because the resin composition of the present invention has high heat resistance and is excellent in dimensional stability upon heating and molding as described above, an instrument panel which is an integrally molded product comprising the resin composition of the present invention can be used in integrally molding a panel 141, an air-conditioner air duct and a case 142 to form a structure of the parts, as shown in FIG. 14, thus eliminating a conventional cross car beam made of steel.

Further, the resin composition of the present invention can be used in integral molding of steel parts such as a bracket which should be attached later. Decorative materials such as skin material etc. can be introduced into a mold at the time of integral molding and then subjected to insert molding to achieve integral molding with the decorative materials. The same effect can also be achieved when the resin composition of the present invention is applied to a door. A majority of door inner panels used at present are those made of steel, into which various parts such as a guide rail for side window, a regulator, a door lock, and a speaker are assembled in a production line. By using the resin composition of the present invention, a door inner panel, a guide rail, a speaker housing etc. can be formed into an integrally molded product.

Another example of the integrally molded product of the present invention is shown in FIG. 15. As shown in FIG. 15, a roof rail 151 that is a large exterior part can be integrally molded with a roof panel 152 made of the resin composition of the present invention. The roof rail is loaded and used under a severe temperature condition, and thus the roof rail has a problem particularly in rigidity and cold resistance when it is made of a conventional resin composition. However, this problem can be solved by using the resin composition of the present invention. The same effect can also be achieved upon application to a spoiler, and the spoiler can be integrally molded with a trunk lid made of the resin composition of the present invention.

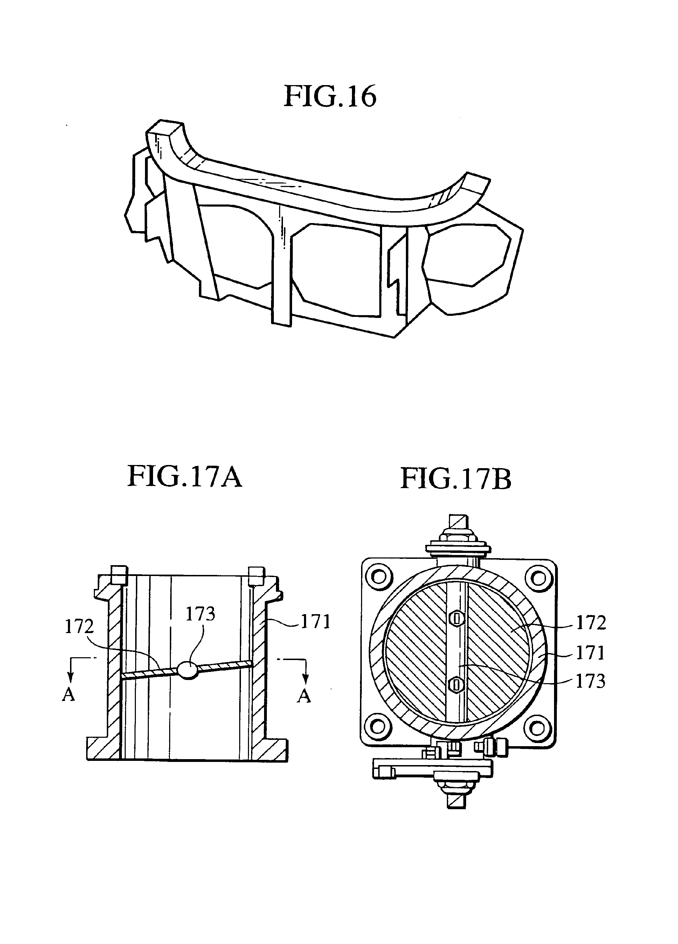

As a radiator core that is a large vehicle part shown in FIG. 16, the one made of resin comes to be used in a front end module, and by using the resin composition of the present invention, the radiator core can be formed into a lighter part excellent in heat resistance, chemical resistance, rigidity, and strength or molded integrally with a shroud or a bracket. According to the present invention, the resin composition can also be used as a transparent material by which transparent members such as a radiator reservoir tank, a head lamp cover etc. can be integrally molded. A reinforcing bumper material which has been separately arranged can also be integrally molded therein.

Parts in an engine room, such as an air cleaner and a throttle chamber, can also be integrally molded by using the present resin composition having low coefficient of linear expansion and excellent in heat resistance and chemical resistance. Conventionally, integral molding of such parts has been attempted, but conventional resin compositions cannot cope with severe environments in an engine room attributable to high temperatures and chemicals such as oil; this problem can be solved by the resin composition of the present invention. The same effect can also be achieved when the resin composition of the present invention is applied to an intake manifold or a cylinder head cover, and these parts can be integrally molded with the above-described parts.

The integrally molded part of the present invention can be constituted exclusively of the resin composition of the present invention, but can be constituted of a multilayer laminate comprising the resin composition of the present invention laminated with another resin composition. The multilayer laminate may contain at least one layer comprising at least the resin composition of the present invention, and the layer consisting of the resin composition of the present invention can be arranged preferably as the uppermost and lowermost layers of the laminate, more preferably not only as the uppermost and lowermost layer but also as an interlayer of the laminate. The multilayer laminate thus formed can be endowed with additional functions not demonstrated by only the resin composition of the present invention.

### • Molded product having movable and unmovable parts

The resin composition of the present invention is not only highly rigid and highly beat-resistant but is also superior in dimensional stability at the time of heating and molding, and can thus be preferably used in parts having movable and unmovable parts, such as a throttle chamber. Accordingly, the resin composition of the present invention can be used in a molded product having movable and unmovable parts.

A large number of parts having movable and unmovable parts are used as gas suction and exhaust parts or in an air-conditioner unit for vehicles. These parts are used mainly in regulating a stream of gas such as air, and are composed of an unmovable part serving as a path for gas, that is, a cylindrical portion for introducing a fluid gas, and a movable portion, that is, an openable/closable lid for regulating the movement of a fluid gas. Examples of such parts include doors in a throttle chamber and in an air-conditioner unit, and air-tightness is important for these parts.

When the conventional resin composition is used to form the cylindrical and lid portions of the part, dimensional accuracy cannot be improved owing to high molding shrinkage and thermal expansion coefficient, thus causing the air-tightness of the openable/closable portion problematic. Heat resistance necessary for the conventional resin composition upon application to parts particularly in an engine room is also problematic. However, the resin composition of the invention having low thermal expansion coefficient, low thermal shrinkage and high heat resistance can be formed into parts excellent in air-tightness to solve these problems. Further, the resin composition of the present invention has high rigidity, and by using the resin composition, the weight of the part can be reduced and response can thereby be improved.

The method of producing the molded product having movable and unmovable parts according to the present invention is not particularly limited, and any methods can be used. The molded product having movable and unmovable parts in the present invention may be produced by molding a movable part and an unmovable part separately by injection molding and then assembling them. It is also preferable that the movable part and unmovable part are molded integrally by two-color molding or the like. This is because air-tightness can thereby be improved and the number of steps and the number of parts can be reduced. By way of example, the throttle chamber shown in FlGs. 17A and 17B can be produced by the following method.

The throttle chamber has a cylindrical chamber 171 as unmovable part and an openable/closable valve 172 and an openable/closable valve shaft 173 as movable parts. First, the openable/closable valve shaft made of metal is set in a two-colored mold, then the cylindrical chamber is injection-molded, and a slid core is allowed move backwards to form a disk-shaped openable/closable valve by injection molding. The metal shaft and the disk-shaped openable/closable valve are thereby integrally molded. The present invention can also be applied preferably to the case where the movable part is an openable/closable lid for regulating a gas fluid and the immovable part is a cylindrical molded product for introducing a fluid gas.

### • Parts or containers for storing hydrocarbon fuels

The resin composition of the present invention is excellent in insulating properties, gas barrier properties and chemical resistance for hydrocarbon fuels. Accordingly, the resin composition of the present invention can be used preferably in parts or containers for storing hydrocarbon fuels, for example in a series of fuel parts of the vehicle for storing hydrocarbon fuels, such as fuel tanks, and in household products such as petroleum containers. Accordingly, the resin composition of the present invention can be used in parts or containers comprising the resin composition of the invention to store hydrocarbon fuels.

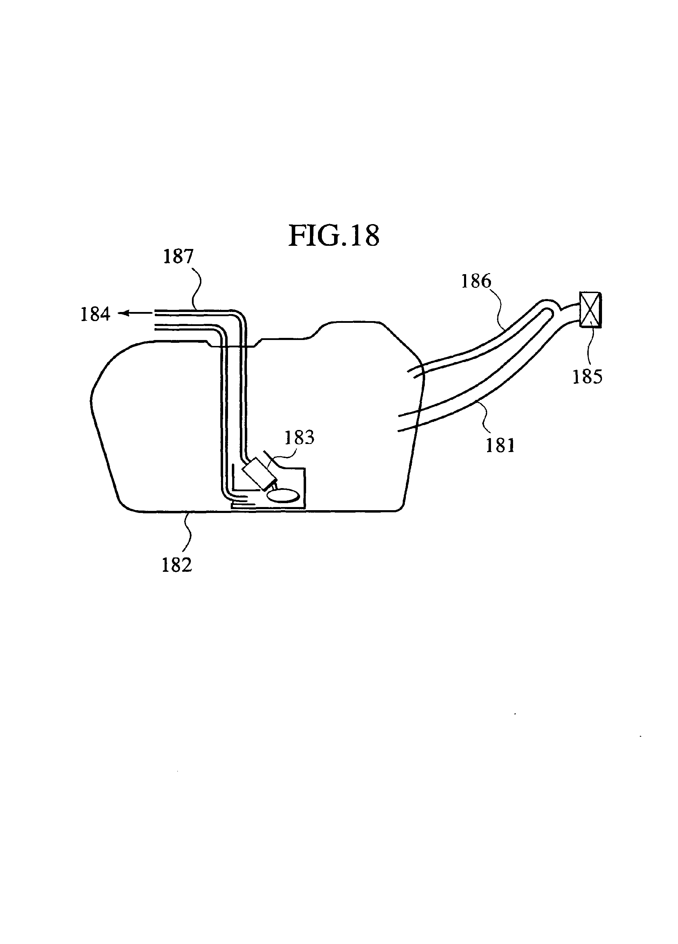

FIG. 18 shows an example of the container for storing hydrocarbon fuels, that is, a fuel tank made of resin for vehicles. In this fuel system, gasoline as hydrocarbon fuel is introduced via a filler tube 181 into a fuel tank 182 and stored therein, and then the gasoline is sent under pressure by a fuel pump 183 to an engine 184.

In the fuel tank made of resin shown in FIG. 18, the part to which the resin composition of the present invention can be applied includes a fuel tank main body 182, a filler cap 185, a ventilation tube 186, a fuel hose pipe 187, a fuel cut-off valve, a delivery pipe, an evaporator tube, a return tube and a fuel sender module.

The fuel tank main body is the largest part among parts in a fuel system for vehicles. In recent years, it is attempted to make a fuel tank main body from resin, and by the effect of higher freedom of the shape of the part, the amount of stored fuels therein can be higher by about 10 L than in a fuel tank main body made of metal, and the weight of the part can be lower by about 25%. Because of these advantages, the fuel tank made of resin is expected to be highly promising.

The present situation and problem in production of the fuel tank made of resin are described in detail. Conventionally, olefinic high-density polyethylene (HDPE) has been used as a matrix resin and formed by blow molding. The material and method have not significantly been changed, but a layer structure of the tank has been significantly changed. For example, a signal-layer fuel tank was initially used, but since enforcement of a law for controlling dissipation of hydrocarbons, the fuel tank should be inevitably multi-layered for reducing penetration of hydrocarbons. As a result, the fuel tank at present mainly has a multilayer structure consisting of 5 layers made of HDPE/polyamide (PA) or HDPE/ethylene vinyl alcohol (EVOH) copolymer and HDPE at both ends thereof. This tank is produced by the same blow molding as in the prior art.

Penetration of many hydrocarbon fuels into the single-layer fuel tank is caused due to high compatibility therebetween. The SP vale (i.e. a measure of compatibility) of HDP is 7.9, and that of hydrocarbon fuels is 6 to 8, and both are in the same range. On the other hand, the SP value of PA used in the multilayer tank is 13.6, and the difference from the SP value of hydrocarbon fuels is great; in other words, the two are in a range poor in compatibility. Therefore, the PA material in the multilayer fuel tank is arranged as a barrier layer for preventing penetration of hydrocarbon fuels into the outside of the tank.

Creation of the multilayer fuel tank has established the techniques meeting the law for controlling dissipation of hydrocarbons, but has caused a significant increase in costs because of its troublesome molding step. In addition to this problem, a laminate structure consisting of a plurality of resin layers makes its recycling difficult, and thus the multilayer fuel tanks raises a new problem that it hardly meets demand for recycling required in the present society.

On the other hand, the surface-modified silica compound in the resin composition of the present invention has silanol groups remaining thereon, and thus has a SP value of higher than 11, to exhibit a function equivalent to that of PA or EVOH in preventing penetration of hydrocarbon fuels. The major component of the resin composition of the present invention is a resin having a SP value of 11 or more with polar groups, such as acrylic resin, and is hardly compatible with gasoline as hydrocarbon fuel; in other words, this material is poor in compatibility therewith and thus more desirable for the fuel tank.

Accordingly, the resin composition of the present invention can be used to provide a fuel tank for vehicles, which can meet the law for controlling dissipation of hydrocarbons even if the fuel tank is the single-layer type. The problematic production cost can thereby be solved, and the demand for recycling in this society can be coped with. The resin composition of the present invention regardless of whether it is the single-layer type or the multilayer type if necessary can be formed into a fuel tank for vehicles by the same blow molding techniques as in the prior art.

The resin composition of the present invention can also be formed into household products such as a petroleum container etc. although the effect of the resin composition in such products is lower than that of the resin composition in the fuel tank for vehicles. The resin composition can thereby reduce dissipation of petroleum into the atmosphere, thus contributing to protecting the global environment.

According to the present invention, those parts having a desired hue can also be obtained by kneading a coloring agent such as a pigment with the resin composition or by inserting a colored layer. Accordingly, the resin composition of the present invention can be used not only in the parts for vehicles but also in parts requiring high qualities in outward appearances such as beauties, smoothness, and transparency, and requiring high rigidity and mar resistance, such as exterior or interior materials in buildings and interior materials in rail way vehicles.

The method of producing various members including the parts for vehicles or interior materials for buildings can be suitably selected from injection molding and vacuum molding as described above, depending on the parts and use. General glass fiber-reinforced resin takes sheering stresses repeatedly so that the glass fiber is destroyed to deteriorate its physical properties gradually and is thus hardly recycled, but because the resin composition of the present invention uses the surface-modified silica compound, the resin hardly takes sheering stresses, thus preventing deterioration in physical properties.

Functional groups on the surface of the oxidized compound contained in the resin composition of the present invention can be analyzed by observing signals attributable to functional groups in FT-IR measurement or by confirming the carbon and nitrogen ratio in functional groups in elemental analysis. Because the results by one kind of analysis may be uncertain, both FT-IR and elemental analysis are preferably conducted to determine the ratio of functional groups.

Hereinafter, the present invention is described in more detail by reference to the Examples. However, the present invention is not limited thereto.

Each evaluation in the Examples was conducted according to the following method.
i) Total light transmittance was measured by a haze meter. (HM-65 by Murakami Color Research Laboratory)
ii) The dispersed state of the filler (silica) was observed with a transmission electron microscope. (H-800 by Hitachi, Ltd.)
iii) Bending strength and elastic modulus were measured by autograph. (DSC-10T by Shimadzu Corporation)
iv) Coefficient of linear expansion was measured by a thermal mechanical measuring device. (TMA120C by Seiko Instruments Inc.)

### (Example 1)

### (Preparation of surface-modified silica)

i) Synthesis of silica having a surface rendered hydrophobic
   2 g of dried and powdered colloidal silica (Adelite AT-30 by Asahi Denka Co., Ltd.) having an average primary particle diameter of 10 to 20 nm, 200 g of cyclohexane as solvent and 0.5 g of pyridine as a dehydrochlorination agent were introduced into a 3-necked flask equipped with a reflux condenser, a dropping funnel and a stirring bar. 50 g of cyclohexane and 0.19 g of chloro(trimethyl)silane were then added dropwise through the dropping funnel over 30 minutes thereto under stirring. Thereafter, the mixture was heated under reflux for 8 hours. After the reaction was finished, the dropping funnel and reflux condenser were replaced by a Liebig condenser through which the unreacted chloro(trimethyl)silane and pyridine were distilled away. The synthesized hydrophobic silica was not isolated as solid powder because it was used immediately in the following surface treatment.
ii) Polar group (aminating) treatment
   The cyclohexane dispersion obtained in i) above was introduced into a 3-necked flask equipped with a reflux condenser, a dropping funnel and a stirring bar, and 1 g of 3-aminopropyl(triethoxy)silane diluted with cyclohexane was added dropwise through the dropping funnel thereto under stirring. Thereafter, the mixture was washed with cyclohexane, and 100 g of toluene was added thereto. The cyclohexane was distilled away by distillation, and the resulting aminated hydrophobic silica was dispersed in toluene to form a dispersion. Analysis of total nitrogen, XPS, NMR and FT-IR revealed that the modified surface had groups consisting of 50% of trimethylsilyl group (hydrophobic group), 40% of 2-aminoethylaminomethyldimethylsilyl group (polar group) and 10% of unreacted hydroxyl group.
   Etherified hydrophobic silica, esterified hydrophobic silica, nitrated hydrophobic silica, cyanated hydrophobic silica, and epoxylated hydrophobic silica can also be obtained by the same method as above. That is, silica having a surface rendered hydrophobic with a trimethylsilyl group is obtained by the method i), and then dispersions of six kinds of surface-modified silica in toluene were obtained by using their corresponding silane-based surface modifiers.

### (Synthesis of a composite agent)

In an inert gas stream, a flask was charged with toluene as a solvent, methyl methacrylate (0.7 mol/l), acrylic acid (0.3 mol/l), and azobisisobutyronitrile (AIBN) (0.5 mol%) as a polymerization initiator. The above surface-modified silica was added through a dropping funnel to the mixture heated at 80 °C under stirring, and then the mixture was heated as such for 24 hours. After the reaction was finished, the reaction mixture was returned to room temperature, and an excess of hexane was added thereto to precipitate the polymer, thereby obtaining the resin composition containing the above surface-modified silica.

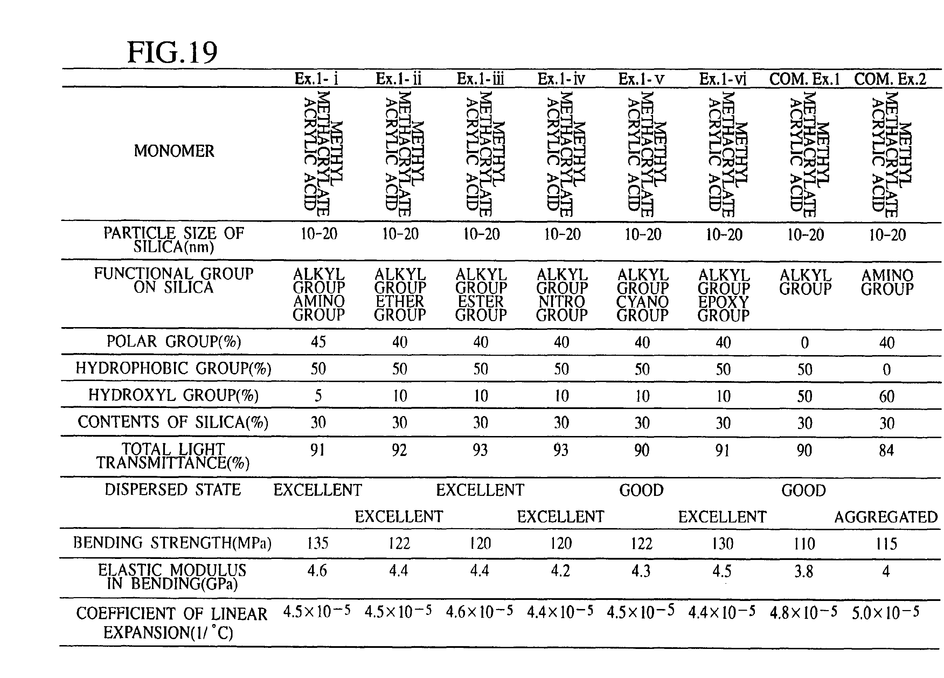

Each of the six resin compositions thus obtained was dried and formed into granules which were then press-molded under heating to give test pieces of about 2 mm in thickness. The resulting sheet was measured for its total light transmittance, dispersed state of silica, bending strength, elastic modulus in bending and coefficient of linear expansion, and the results in FIG. 19 were obtained.

### (Example 2)

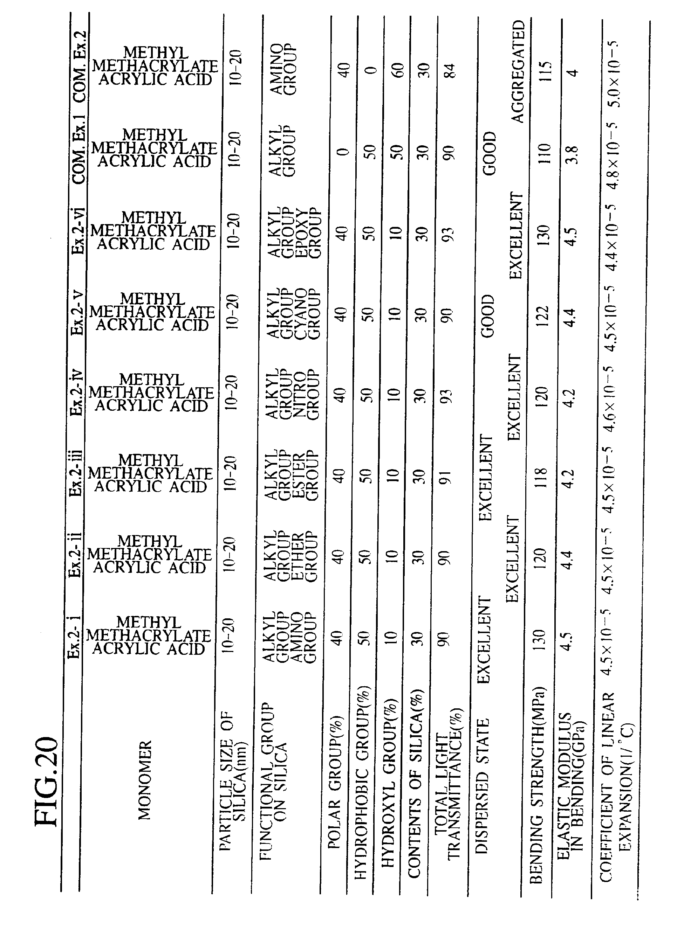

In this example, silica having a surface rendered hydrophobic was synthesized in the same manner as in Example 1, and polar group introduction and synthesis were simultaneously carried out.
i) Synthesis of silica having a surface rendered hydrophobic
   2 g of dried and powdered colloidal silica AT-30 having an average primary particle diameter of 10 to 20 nm, 200 g of cyclohexane as solvent and 0.5 g of pyridine as a dehydrochlorination agent were introduced into a 3-necked flask equipped with a reflux condenser, a dropping funnel, and a stirring bar. 50 g of cyclohexane and 0.1 g of chloro(trimethyl)silane were then added dropwise through the dropping funnel over 30 minutes thereto under stirring. Thereafter, the mixture was heated under reflux for 8 hours. After the reaction was finished. 100 g of toluene was added thereto, and the dropping funnel and reflux condenser were replaced by a Liebig condenser through which the unreacted chloro(trimethyl)silane and pyridine were distilled away. However, the toluene was left without being distilled away. The synthesized hydrophobic silica was not isolated as solid powder because it was immediately used in the following surface treatment.
ii) Polar group treatment and polymerization
   In an inert gas stream, a flask was charged with toluene as a solvent, a silane-based surface treatment agent for introducing polar groups, methyl methacrylate (0.7 mol/l), acrylic acid (0.3 mol/l), and AIBN (0.5 mol%). The above surface-modified hydrophobic silica was added through a dropping funnel to the mixture heated at 80 °C under stirring, and then the mixture was heated as such for 24 hours. After the reaction was finished, the reaction mixture was returned to room temperature, and an excess of hexane was added thereto to precipitate the polymer thereby obtaining the resin composition containing the above surface-modified silica.
   Each of the six resin compositions thus obtained was dried and formed into granules which were then press-molded under heating to give test pieces of about 2 mm in thickness. The resulting sheet was measured for its total light transmittance, dispersed state of silica, bending strength, elastic modulus in bending and coefficient of linear expansion, and the results in FIG. 20 were obtained. Although the production method was different from that in Example 1, a difference in physical properties therebetween was hardly observed.

### (Example 3)

### (Preparation of surface-modified silica)

Surface-modified silica was prepared in the same manner as in Example 1 except that the introduction of polar groups onto the surface was followed by an additional step in which cyclohexane as the solvent was changed by a difference in boiling point into 1,4-dioxane.

### (Synthesis of a composite agent)

10 % by weight of Polycarbonate was dissolved in 1,4-dioxane as a solvent in a flask. The above surface-modified silica was added through a dropping funnel thereto under stirring, and then heated as such for 4 hours. After stirring was finished, an excess of hexane was added thereto to precipitate the polymer, thus obtaining six polycarbonate-based resin compositions.

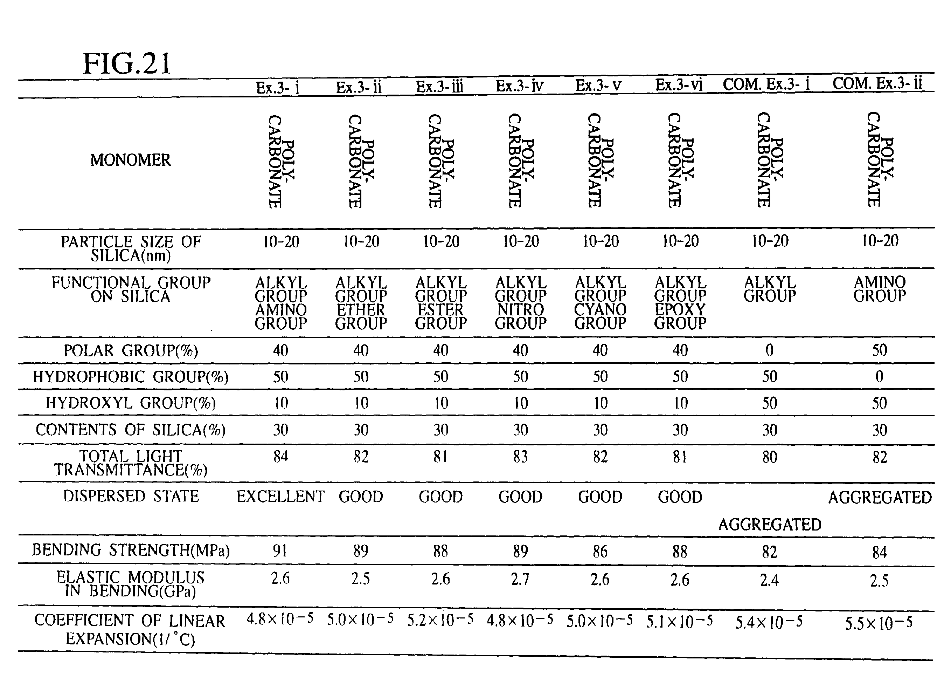

Each of the six resin compositions thus obtained was dried and formed into granules which were then press-molded under heating to give a test piece of about 2 mm in thickness. The resulting sheet was measured for its total light transmittance, dispersed state of silica, bending strength, elastic modulus in bending and coefficient of linear expansion, and the results in FIG. 21 were obtained.

### (Comparative Example 1)

### (Silica surface-modified with hydrophobic groups)

Methyl methacrylate (0.7 mol/1) and acrylic acid (0.3 mol/1) were dissolved in methylethylketone, then AIBN (0.5 mol%) was added thereto, and the mixture was heated at 80 °C. The mixture was subjected to polymerization reaction while spherical fine silica particles (Snowtex by Nissan Chemical Industries, Ltd.) surface-modified with dichloro(dimethyl)silane and dispersed in methylethylketone were added dropwise thereto. After about 6 hours, the reaction product was precipitated with hexane to give a comparative resin composition consisting of fine silica particles and acrylic resin in a ratio of 30/70 by weight. The resulting resin composition was dried and press-molded under heating to give a sheet of about 2 mm in thickness. The results are shown in FIGs. 19 and 20.

### (Comparative Example 2)

### (Surface modification with only polar groups)

Methyl methacrylate (0.7 mol/l) and acrylic acid (0.3 mol/l) were dissolved in methylethylketone, then AIBN (0.5 mol%) was added thereto, and the mixture was heated at 80°C. The mixture was subjected to polymerization reaction while 2 g of spherical colloidal silica subjected to surface treatment with 3-aminopropyl(triethoxy)silane and dispersed in methylethylketone were added dropwise thereto. The colloidal silica used was silica obtained by drying and powdering Adelite AT-30 by Asahi Denka Co., Ltd.. After about 6 hours, the reaction product was precipitated with hexane to give a comparative resin composition consisting of fine silica particles and acrylic resin in a ratio of 30/70 by weight. The resulting resin composition was dried and press-molded under heating to give a sheet of about 2 mm in thickness. The results are shown in FIGs. 19 and 20.

### (Comparative Example 3)

70 g of polycarbonate resin (lupilon S2000 by Mitsubishi Engineering-Plastics Corporation) was dissolved in 1,4-dioxane, and a dispersion prepared by dispersing, in methylethylketone, 30 g of i) spherical fine silica particles (Adelite AT-30) surface-modified with dichloro(dimethyl)silane or ii) spherical fine silica particles surface-modified with 3-aminopropyl(triethoxy)silane was added dropwise thereto. The fine silica particles were obtained by drying above solution. Thereafter, hexane was added to the dispersion to give a comparative resin composition consisting of fine silica particles and the polycarbonate resin in a ratio of 30/70 by weight. The resulting resin composition was dried and press-molded under heating to give a sheet of about 2 mm in thickness.

The resulting molded product was extremely poor in transparency with a slight improvement in strength and elasticity with a reduction in thermal expansion coefficient. The evaluation results in each test are shown in FIG. 21.

The entire content of a Japanese Patent Application No. P2003-64944 with a filing date of March 11, 2003 is herein added by reference.

Although the invention has been described above by reference to certain embodiments of the invention, the invention is not limited to the embodiments described above will occur to these skilled in the art, in light of the teachings. The scope of the invention is defined with reference to the following claims.

## Claims

1. A resin composition, comprising:
a thermoplastic resin; and
an oxidized compound having a hydrophobic group and a polar group on the surface thereof.

2. A resin composition according to claim 1,
wherein the polar group includes a hydroxyl group.

3. A resin composition according to claim 2,
wherein the polar group includes a polar group other than the hydroxyl group.

4. A resin composition according to claim 3,
wherein a percentage of the other polar group is 50% or more based on the whole polar group.

5. A resin composition according to claim 3 or 4,
wherein the other polar group is at least one selected from an amino group, an ether group, an ester group, a nitro group, a cyano group, and an epoxy group.

6. A resin composition according to any of claims 1 through 5,
wherein a percentage of the hydrophobic group in the oxidized compound is within a range of 30 to 70% based on the whole of the hydrophobic group and the polar group.

7. A resin composition according to any of claims 1 through 6,
wherein the hydrophobic group is at least one selected from an alkyl group, an allyl group, and an aryl group.

8. A resin composition according to any of claims 1 through 7,
wherein a length of at least one side of the oxidized compound is within a range of 1 to 200 nm.

9. A resin composition according to any of claims 1 through 8,
wherein a length of the longest side of the oxidized compound is 380 nm or less.

10. A resin composition according to any of claims 1 through 9,
wherein an amount of the oxidized compound added into the thermoplastic resin is within a range of 1 to 60% by weight.

11. A resin composition according to any of claims 1 through 10,
wherein the thermoplastic resin includes acrylic resin and/or methacrylic resin.

12. A resin composition according to any of claims 1 through 10,
wherein the thermoplastic resin is polycarbonate resin.

13. A resin composition according to any of claims 1 through 12,
wherein the oxidized compound is at least one selected from the group consisting of silica, titania, alumina, and zirconia.

14. A filler, comprising:
an oxidized compound having a hydrophobic group and a polar group on the surface thereof.

15. A filler according to claim 14,
wherein the polar group includes a hydroxyl group.

16. A filler according to claim 15,
wherein the polar group includes a polar group other than the hydroxyl group.

17. A filler according to claim 16,
wherein a percentage of the other polar group is 50% or more based on the whole polar group.

18. A filler according to claim 16 or 17,
wherein the other polar group is at least one selected from an amino group, an ether group, an ester group, a nitro group, a cyano group, and an epoxy group.

19. A filler according to any of claims 14 through 18,
wherein a percentage of the hydrophobic group in the oxidized compound is within a range of 30 to 70% based on the whole of the hydrophobic group and the polar group.

20. A filler according to any of claims 14 through 19,
wherein the hydrophobic group is at least one selected from an alkyl group, an allyl group, and an aryl group.

21. A filler according to any of claims 14 through 20,
wherein the length of at least one side of the oxidized compound is within a range of 1 to 200 nm.

22. A filler according to any of claims 14 through 21,
wherein the length of the longest side of the oxidized compound is 380 nm or less.

23. A method of producing a resin composition, comprising:
preparing a filler containing an oxidized compound having a hydrophobic group and a polar group on the surface thereof; and
dispersing the filler in a thermoplastic resin.

24. A method of producing a resin composition according to claim 23,
wherein the dispersing comprises: dispersing the filler in a solution containing a monomer constituting the thermoplastic resin; and polymerizing the monomer.

25. A method of producing a resin composition according to claim 23,
wherein the hydrophobic group and the polar group are formed by replacing a hydroxyl group on a surface of the oxidized compound by using a surface modifier.

26. A vehicle part comprising:
a resin composition including a thermoplastic resin and an oxidized compound having a hydrophobic group and a polar group on the surface thereof.

27. A vehicle part according to claim 26,
wherein the vehicle part is at least one selected from a molded exterior part, an outer plate, a wiper (30), a door mirror stay, a pillar (132), a window provided with a heating coil, a mirror (64), a lamp reflector (73), a cover (86) in an engine room, a case (94) in an engine room, a part in a cooling unit, a part which stores hydrocarbon fuels, and a container which stores hydrocarbon fuels.

28. A vehicle part according to claim 26,
wherein the vehicle part is a molded resin product, and
the molded resin product has a transparent part and an opaque part, and the resin composition is contained in at least the transparent part.

29. A vehicle part according to claim 28,
wherein the transparent part and the opaque part are integrally molded.

30. A vehicle part according to claim 28 or 29,
wherein the opaque part is formed by coloring with a pigment dispersed in the resin composition.

31. A vehicle part according to claim 28 or 29,
wherein the opaque part is formed by coating or printing before or after molding.

32. A vehicle part according to claim 28 or 29,
wherein the opaque part is formed by using a colored sheet.

33. A vehicle part according to claim 26,
wherein the vehicle part is a cover (86) in an engine room or a case (94) in an engine room, and
a resin composition-containing part in the cover (86) or the case (94) is transparent.

34. A vehicle part according to claim 26,
wherein the vehicle part is an integrally molded resin product having a hollow structure communicating with the air and/or a closed hollow structure.

35. A vehicle part according to claim 34,
wherein a gas, liquid, solid or a mixture of two or more thereof is packed and sealed in the hollow structure.

36. A vehicle part according to claim 34 or 35,
wherein the outermost layer of the integrally molded resin product is constituted by a decorative material.

37. A vehicle part according to any of claims 34 through 36,
wherein the integrally molded resin product is applied to an outer plate or an interior part for automobiles.

38. A vehicle part according to claim 26,
wherein the vehicle part is an integrally molded part which comprises two or more parts having different functions.

39. A vehicle part according to claim 26,
wherein the vehicle part is a molded product having a movable part and an unmovable part.

40. A vehicle part according to claim 39,
wherein the movable part and the immovable part in the vehicle part are formed integrally by two-color molding.

41. A vehicle part according to claim 39 or 40,
wherein the movable part is an openable/closable lid which regulates movement of a gas, and the unmovable part is a cylindrical molded product which introduces the gas.

42. A vehicle part according to claim 26,
wherein the vehicle part is a part which stores hydrocarbon fuels, and
the part which stores the fuels constitutes a series of fuel parts for vehicles.

43. A vehicle part according to claim 26,
wherein the vehicle part is a container which stores hydrocarbon fuels, and
the container which stores fuels constitutes a fuel tank for vehicles.

44. A vehicle part according to claim 43,
wherein the container which stores fuels is molded by blow molding.

45. A method of producing an integrally molded resin product, comprising:
preparing a resin composition including a thermoplastic resin and an oxidized compound having a hydrophobic group and a polar group on the surface thereof;
inserting the resin composition into a mold; and
injecting a pressurized fluid into the resin composition to form a hollow structure.

46. A method of producing an integrally molded resin product according to claim 45,
wherein the integrally molded resin product is formed with two resin sheets including the resin composition, and
the method further comprises:
heating the two resin sheets;
inserting the heated two resin sheets into the open mold;
injecting the pressurized fluid between the resin sheets before or after an outer periphery of the resin sheets is pressed to fuse the outer periphery thereof; and
closing the mold to maintain the pressure of the pressurized fluid in order to form the hollow structure while or after the resin sheets are distended.

47. A method of producing an integrally molded resin product according to claim 45, further comprising:
melting the resin composition;
injecting the melted resin composition into the closed mold; and
expanding the capacity of a cavity in the mold and simultaneously injecting the pressurized fluid into the melted resin composition to form the hollow structure.

48. A method of producing an integrally molded resin product according to claim 45,
wherein the integrally molded resin product is formed with one or two resin sheets including the resin composition, and
the method further comprises:
inserting the resin sheet into a cavity in the open mold;
closing the mold; and
expanding the capacity of the cavity in the mold while or after a melted resin is charged into the back surface of the resin sheet, and simultaneously injecting the pressurized fluid into the melted resin to form the hollow structure.
